# EUROPÄISCHE PATENTSCHRIFT

(11) **EP 0 944 666 B1**
(45) Veröffentlichungstag und Bekanntmachung des Hinweises auf die Patenterteilung: **05.03.2003**
(21) Anmeldenummer: 97952837.9
(22) Anmeldetag: 01.12.1997
(51) Int. Cl.: C08G 67/02, B01J 31/00

(54) **KATALYSATORSYSTEME FÜR DIE HERSTELLUNG VON COPOLYMERISATEN AUS KOHLENMONOXID UND OLEFINISCH UNGESÄTTIGTEN VERBINDUNGEN**
CATALYST SYSTEMS FOR PRODUCING COPOLYMERS OF CARBON MONOXIDE AND OLEFINICALLY UNSATURATED COMPOUNDS
SYSTEMES CATALYSEURS UTILES POUR PRODUIRE DES COPOLYMERES DE MONOXYDE DE CARBONE ET DE COMPOSES OLEFINIQUEMENT INSATURES

(30) Priorität: 12.12.1996 DE 19651786
(43) Veröffentlichungstag der Anmeldung: 29.09.1999
(73) Patentinhaber: BASF AKTIENGESELLSCHAFT, 67056 Ludwigshafen (DE)
(72) Erfinder: SLANY, Michael, D-67227 Frankenthal (DE); HÖHN, Arthur, D-67281 Kirchheim (DE)
(86) Internationale Anmeldenummer: EP9706714
(87) Internationale Veröffentlichungsnummer: WO98025991

(56) Entgegenhaltungen:
- EP-A- 0 369 528
- DE-A- 19 518 737
- A. S. ABU-SURRAH ET AL.: "Ultrahigh molecular weight alternating propene/ethene/carbon monoxide terpolymers with elastic properties" MACROMOL. RAPID COMMUN., Bd. 17, August 1996, Seiten 559-565, XP000634647

## Beschreibung

Die vorliegende Erfindung betrifft neue Katalysatorsysteme für die Herstellung von Copolymerisaten aus Kohlenmonoxid und olefinisch ungesättigten Verbindungen, enthaltend als aktive Bestandteile
a) einen Metallkomplex der allgemeinen Formel (I) 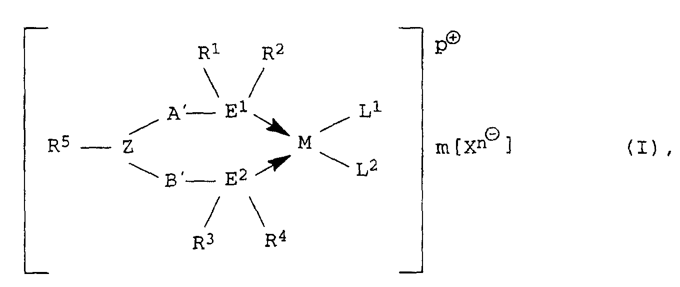 in welcher die Substituenten und Indizes die folgende Bedeutung haben:
   - R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 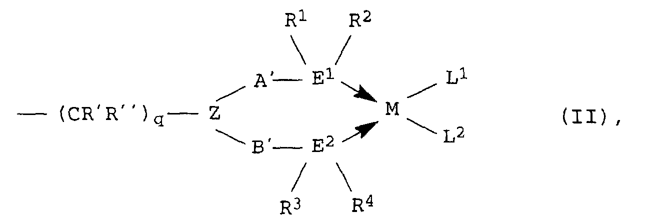 in der
   q eine ganze Zahl von 0 bis 20 bedeutet und
   R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Stubstituenten in (II) wie in (I) die nachfolgende Bedeutung haben,
   - M: ein Metall aus der Gruppe VIIIB des Periodensystems der Elemente,
   - E¹, E²: ein Element aus der Gruppe VA des Periodensystems der Elemente,
   - Z: ein Element aus der Gruppe VA des Periodensystems der Elemente,
   - R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
   - A', B': C₁-C₄-Alkyleneinheiten in substituierter und unsubstituierter Form, silylenverbrückte organische Reste sowie NR⁸-Reste,
   - R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
   - L¹, L²: formal geladene oder neutrale Liganden,
   - X: formal ein- oder mehrwertige Anionen,
   - p: 0, 1, 2, 3 oder 4,
   - m, n: 0, 1, 2, 3 oder 4,
   - wobei: p = m x n, und
b) eine oder mehrere Lewis- oder Protonensäuren oder ein Gemisch von Lewis- und Protonensäuren.

Des weiteren betrifft die vorliegende Erfindung Verfahren zur Herstellung von Copolymerisaten aus Kohlenmonoxid und olefinisch ungesättigten Monomerverbindungen sowie die Verwendung von Katalysatorsystemen auf der Basis von cis-verbrückten Metallkomplexen für die Herstellung von Copolymerisaten aus Kohlenmonoxid und olefinisch ungesättigten Monomerverbindungen.

Katalysatorsysteme für die Herstellung von Copolymerisaten aus Kohlenmonoxid und olefinisch ungesättigten Verbindungen sind hinlänglich bekannt. Als aktive Katalysatorbestandteile werden im allgemeinen mit bidentaten Phosphinliganden chelatisierte cis-Palladiumkomplexe wie [Pd(R₂P(CH₂)ₙPR₂)(OAC)₂] eingesetzt (vgl. EP 0 121 965). Für die Copolymerisation von Kohlenmonoxid mit Ethylen und/oder Propylen haben sich als Liganden insbesondere bidentate Phosphinliganden mit einer Propylenverbrückung bewährt, wobei bevorzugt Katalysatorsysteme mit zum Beispiel [(dmppp)Pd(OAc)₂](BF₄)₂ als Metallkomplex zum Einsatz kommen (dmppp = 1,3-Bis{di(2-methoxyphenyl)phosphino}propan) (vgl. J. Organamet. Chem. 1991, 417, S. 235 ff).

1,3-Bis{di(2-methoxyphenyl)phosphino}propan) wird, ähnlich wie die ebenfalls häufig bei der Copolymerisation von Kohlenmonoxid und olefinisch ungesättigten Verbindungen benutzte Brückeneinheit 1,3-Bis{diphenylphosphino}propan (dppp), durch Umsetzung von 1,3-Dibrom- bzw. 1,3-Dichlorpropan mit den entsprechenden Metallphosphiden erhalten (vgl. T. Yamagishi, S. Ikeda, M. Yatagai, M. Yamaguchi, M. Hida, J. Chem. Soc. Perkin Trans. 1, 1988, 1787-1790), was jedoch zwangsläufig die Handhabung äußerst reaktiver sowie hochentzündlicher und toxischer Reagenzien mit sich bringt. Aus sicherheitstechnischen Gründen ist daher eine großtechnische Verfahrensweise problematisch, auf jeden Fall erfordert bereits die herkömmliche Darstellung von alkylenverbrückten Phosphinliganden einen hohen apparativen Aufwand, um das Gefahrenpotential beim Umgang mit halogenhaltigen, entzündlichen Stoffen möglichst gering zu halten. Darüber hinaus sind unsymmetrisch substituierte alkylenverbrückte Liganden, d.h. solche mit unterschiedlichen Phosphinsubstituenten oder mit unterschiedlichen chelatisierend wirkenden Atomen, ausgehend von Dibrom- oder Dichlor-terminierten Alkylenverbindungen nur bedingt zugänglich. Zudem sind alkylenverbrückte bidentate Liganden in der Regel auch nicht geeignet, um kovalent an ein Trägermaterial angeknüpft zu werden, wodurch deren Einsatzbreite erheblich eingeschränkt ist.

Bidentate Ligandensysteme, die kovalent an einen Träger gekoppelt werden können, finden sich beispielsweise in der europäischen Patentanmeldung EP-A 0 585 493, in der Phosphinliganden mit einer Propylenbrücke, die in 2-Position eine tertiäre Hydroxylgruppe aufweist, beschrieben werden. Ein tertiärer Alkohol ist naturgemäß jedoch besonders empfindlich, z.B. gegenüber Säuren, und zudem infolge sterischer Effekte relativ reaktionsträge, so daß für eine Ether- oder Esterverknüpfung mit einer Spacergruppe von vornherein schlechte Ausbeuten zu erwarten sind. Dieses ist insbesondere bei hochfunktionalisierten, arbeits- und kostenintensiven Chelatliganden von Nachteil. Darüber hinaus werden für die Synthese der genannten Phosphinliganden äußerst empfindliche, toxische Ausgangsprodukte eingesetzt, die schwierig zu handhaben sind und die nur mit hohem synthetischen und technischen Aufwand (Na/fl. NH₃, -78°C) den gewünschten, symmetrischen Bisphosphinliganden liefern.

Insoweit die Wirksamkeit eines Katalysators für die homogene Katalyse im allgemeinen maßgeblich von der Natur des Metalls und des Chelatliganden beeinflußt wird, wäre es daher wünschenswert, auf ein Ligandensystem zurückgreifen zu können, das sich mit möglichst geringem Aufwand möglichst vielfältig modifizieren läßt und unproblematisch in größeren Mengen ausgehend von einfachen, ungefährlichen Grundkörpern herstellbar ist.
Der vorliegenden Erfindung lag demgemäß die Aufgabe zugrunde, Katalysatorsysteme auf der Grundlage von cis-verbrückten Metallkomplexen für die Copolymerisation von Kohlenmonoxid mit olefinisch ungesättigten Verbindungen zur Verfügung zu stellen, die Chelatliganden enthalten, die auf einfache Art und Weise aus leicht erhältlichen und handhabbaren Grundkörpern auch mit unsymmetrischem Substitutionsmuster zugänglich sind.

Demgemäß wurden die eingangs definierten Katalysatorsysteme sowie deren Verwendung für die Herstellung von Copolymerisaten aus Kohlenmonoxid und olefinsich ungesättigten Verbindungen gefunden. Des weiteren wurden Verfahren zur Herstellung von Copolymerisaten aus Kohlenmonoxid und olefinisch ungesättigten Monomerverbindungen gefunden.

Bevorzugt wird ein Katalysatorsystem eingesetzt, das als aktive Bestandteile enthält:
a) einen Metallkomplex der allgemeinen Formel (I), 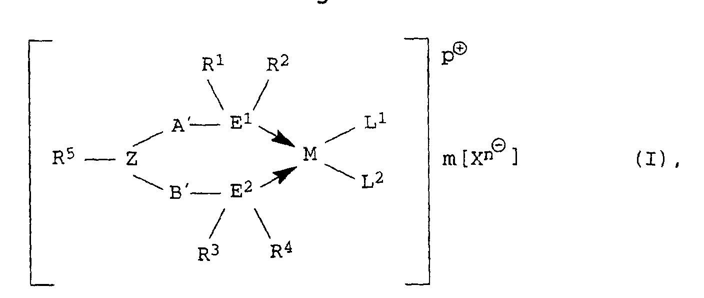 in welcher die Substituenten und Indizes die folgende Bedeutung haben:
   - R⁵: Wasserstoff, aliphatische Reste, wie Methyl, Ethyl, i-Propyl oder t-Butyl, cycloaliphatische Reste, wie Cyclopentyl oder Cyclohexyl, aromatische Reste, wie Phenyl, o-Methoxyphenyl oder 4-Hydroxyphenyl, Substituenten mit anionischen Gruppen, wie -(CH₂)ₙ-SO₃⁻, Substituenten mit kationischen Gruppen, wie -(CH₂)ₙ-NR₃⁺ oder Hydroxyoder Aminogruppen enthaltende Substituenten, wie -(CH₂)ₙ-OH bzw. -(CH₂)ₙ-NR₂ (n = 1 bis 30), wobei R Wasserstoff, Aryl oder Alkyl bedeutet, Reste der allgemeinen Formel (II) 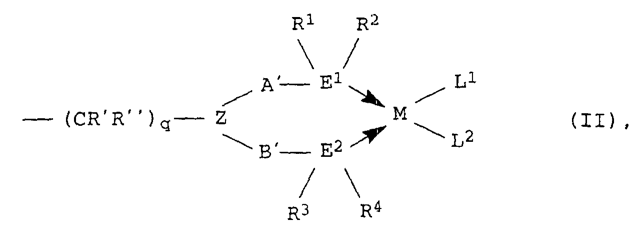 in der
   q eine ganze Zahl von 0 bis 20 bedeutet und
   R', R'' unabhängig voneinander Wasserstoff oder C₁- bis C₁₀-Alkyl, geradkettig oder verzweigt, wie Methyl, Ethyl, i-Propyl, n-Propyl, C₃- bis C₁₀-Cycloalkyl wie Cyclopropyl, Cyclopentyl, Cyclohexyl, C₆- bis C₁₄-Aryl, wie Phenyl, bedeuten und die weiteren Substituenten in (II) wie in (I) die nachfolgende Bedeutung haben,
   - M: Palladium oder Nickel,
   - E¹, E²: Stickstoff oder Phosphor,
   - Z: Stickstoff oder Phosphor,
   - R¹ bis R⁴: cycloaliphatische Reste, wie Cyclopropyl, Cyclopentyl, Cyclohexyl oder Menthyl, verzweigte aliphatische Reste, wie i-Propyl, s-Butyl oder t-Butyl, aromatische Reste, wie Phenyl, o-Methoxyphenyl oder p-Trifluormethylphenyl und heteroaromatische Reste, wie Pyridyl,
   - A', B': Methylen oder Ethylen in substituierter und unsubstituierter Form, beispielsweise Ethyliden oder Propyliden, Benzyliden, o-Phenylen,
   - L¹, L²: Hydride, Sulfate, Halogenide, Phosphate, Nitrate, Acetonitril, Methanol, Acetylaceton, Tetrahydrofuran, Acetat, Trifluoracetat, Tosylat, Wasser
   - X: Tetrafluoroborat, Hexafluorophosphat, Hexafluoroantimonat, Pentafluorbenzoat, Trifluormethansulfonat, Trifluoracetat, Perchlorat, p-Toluolsulfonat, Tetraarylborate,
   - p: 0, 1, 2, 3 oder 4,
   - m, n: 0, 1, 2, 3 oder 4,
   - wobei: p = m x n, und
b) Trifluoressigsäure, Perchlorsäure, p-Toluolsulfonsäure, Triarylborane.

In einer weiteren Ausführungsform stellen in dem aktiven Bestandteil a) des erfindungsgemäßen Katalysatorsystems L¹ oder L², nicht jedoch L¹ und L² gleichzeitig, ein Halogenid dar.

Beispiele für besonders bevorzugte Bestandteile a) der erfindungsgemäßen Katalysatorsysteme sind
(Bis(diphenylphosphinomethyl)phenylamin-palladium-bis-acetonitril)bis(perchlorat),
(Bis(diphenylphosphinomethyl)phenylamin-palladium-bis-acetonitril)bis(tetrafluoroborat),
(Bis(diphenylphosphinomethyl)phenylamin-palladium-bis-acetonitril)bis(trifluoracetat),
(Bis(diphenylphosphinomethyl)-t-butylamin-palladium-bis-acetonitril)bis(perchlorat),
(Bis(diphenylphosphinomethyl)-t-butylamin-palladium-bis-acetonitril)bis(tetrafluoroborat),
(Bis(diphenylphosphinomethyl)-t-butylamin-palladium-bis-acetonitril)bis(trifluoracetat),
Bis(diphenylphosphinomethyl)phenylamin-palladium-bis-acetat und
Bis(diphenylphosphinomethyl)-t-butylamin-palladium-bis-acetat sowie
(Bis(diphenylphosphinomethyl)phenylamin-palladium-chlorid-acetonitril)(perchlorat),
(Bis(diphenylphosphinomethyl)phenylamin-palladium-chlorid-acetonitril)(tetrafluoroborat),
(Bis(diphenylphosphinomethyl)phenylamin-palladium-chlorid-acetonitril)(trifluoracetat),
(Bis(diphenylphosphinomethyl)-t-butylamin-palladium-chloridacetonitril)(perchlorat),
(Bis(diphenylphosphinomethyl)-t-butylamin-palladium-chloridacetonitril)(tetrafluoroborat),
(Bis(diphenylphosphinomethyl)-t-butylamin-palladium-chloridacetonitril)(trifluoracetat),
Bis(diphenylphosphinomethyl)phenylamin-palladium-chlorid-acetat und
Bis(diphenylphosphinomethyl)-t-butylamin-palladium-chloridacetat.

Grundsätzlich geeignet als Bestandteil der Metallkomplexe (I) sind zum Beispiel Chelatliganden, die unter die allgemeine Formel (III) fallen 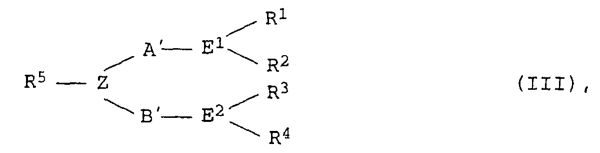 in welcher die Substituenten und Indizes die folgende Bedeutung haben:
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel (IV) 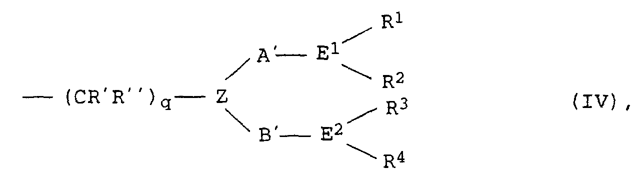 in der
q eine ganze Zahl von 0 bis 20 bedeutet und
R',R" Wasserstoff oder Substituenten, ausgewählt aus der Gruppe bestehend aus C₁- bis C₂₀-kohlenstofforganischen und C₃- bis C₃₀-siliciumorganischen Resten, darstellen und
die weiteren Stubstituenten in (II) wie in (I) die nachfolgende Bedeutung haben,
- E¹, E²: ein Element aus der Gruppe VA des Periodensystems der Elemente,
- Z: ein Element aus der Gruppe VA des Periodensystems der Elemente,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie -NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten.

Als Metalle M der erfindungsgemäßen Katalysatorsysteme eignen sich die Metalle der Gruppe VIIIB des Periodensystems der Elemente, also neben Eisen, Cobalt und Nickel vornehmlich die Platinmetalle wie Ruthenium, Rhodium, Osmium, Iridium und Platin sowie ganz besonders Palladium. Die Metalle können in den Komplexen formal ungeladen, formal einfach positiv geladen, oder vorzugsweise formal zweifach positiv geladen vorliegen.

Als Elemente E¹ und E² des Chelatliganden kommen die Elemente der V. Hauptgruppe des Periodensystems der Elemente (Gruppe VA), also Stickstoff, Phosphor, Arsen, Antimon oder Bismut in Betracht. Besonders geeignet sind Stickstoff oder Phosphor, insbesondere Phosphor. Der Chelatligand kann auch unterschiedliche Elemente E¹ und E² enthalten, so zum Beispiel Stickstoff und Phosphor.

Die verbrückende Struktureinheit in den Metallkomplexen (I) des erfindungsgemäßen Katalysatorsystems setzt sich aus den Komponenten A', B' und Z (s.a. Formel (I)) zusammen.

Unter einer verbrückenden Struktureinheit wird grundsätzlich eine mehratomige Gruppierung verstanden, die die Elemente E¹ und E² miteinander verbindet.

Die Komponente Z wird aus einem Element der V. Hauptgruppe des Periodensystems der Elemente, also Stickstoff, Phosphor, Arsen, Antimon oder Bismut gebildet. Vorzugsweise werden Stickstoff und Phosphor, insbesondere aber Stickstoff eingesetzt.

Die Einheiten A' und B' können kohlenstofforganische und siliciumorganische Reste sein. Als kohlenstofforganische Reste sind C₁- bis C₄-Alkyleneinheiten in substituierter und unsubstituierter Form geeignet, zum Beispiel Methylen, Ethylen, Propylen sowie Ethyliden, Propyliden und Benzyliden. Bevorzugt werden Methylen, Ethylen, Ethyliden und Benzyliden, besonders bevorzugt Methylen, eingesetzt.

Des weiteren können A' und B', ebenfalls unabhängig voneinander, Silylenreste bedeuten, beispielsweise -R'''-Si-R''''-, mit R''', R'''' als C₁- bis C₄-Alkyleneinheiten in substituierter und unsubstituierter Form, wie Methylen, Ethylen oder Ethyliden, Aryleneinheiten, insbesondere o-Phenylen, oder Aralkylideneinheiten, insbesondere Benzyliden, wobei die freien Valenzen am Silicium mit Alkylgruppen, wie Methyl, -i-Propyl oder t-Butyl, Arylgruppen, wie Phenyl, oder Aralkylgruppen, wie Benzyl, abgesättigt sein können.

A' und B' können auch eine -NR⁸-Einheit darstellen, in der -R⁸ Wasserstoff oder einen Substituenten, ausgewählt aus der Gruppe bestehend aus C₁- bis C₂₀-kohlenstofforganischen und C₃- bis C₃₀-siliciumorganischen Resten bedeutet, wie C₁- bis C₁₀-Alkyl, insbesondere Methyl, Ethyl, Aryl, insbesondere Phenyl oder Aralkyl, insbesondere Benzyl.

A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-R⁵ bzw. B'-Z-R⁵ gebildet wird, d.h. A'-Z-R⁵ bzw. B'-Z-R⁵ können z.B. einen substituierten oder unsubstituierten Pyrrolidin- oder Piperidinring ausbilden.

Für den Fall einer einatomigen kohlenstofforganischen Verbrückung zwischen Z und E¹ bzw. E² stellen A' und B', unabhängig voneinander, bevorzugt eine -CR⁹R¹⁰-Einheit dar, worin R⁹ und R¹⁰, ebenfalls unabhängig voneinander, Wasserstoff, C₁- bis C₁₀-Alkyl, wie Methyl, Ethyl oder Propyl, C₆- bis C₁₄-Aryl, beispielsweise Phenyl, C₇- bis C₂₀-Aralkyl oder Heteroaryl bedeuten können. Des weiteren kann die einatomige Verbrückung mit den Resten R⁹ und R¹⁰ ein Ringsystem, wie Cyclopropyl, Cyclopentyl oder Cyclohexyl ausbilden.

Als kohlenstofforganische Reste R¹ bis R⁴ kommen, unabhängig voneinander, z.B. aliphatische und cycloaliphatische sowie aromatische und heteroaromatische mit 1 bis 20 C-Atomen in Betracht.

Als geradkettige aliphatische Reste sind u.a. geeignet Methyl, Ethyl, Propyl, Butyl, Pentyl, Hexyl und Octyl.

Als verzweigte aliphatische Reste eignen sich C₃- bis C₂₀-, vorzugsweise C₃- bis C₁₂-Alkylreste, wie die i-Propyl-, i-Butyl-, s-Butyl-, Neopentyl- und t-Butylgruppe.

Besonders geeignete verzweigte aliphatische Reste sind die t-Butylgruppe, die i-Propylgruppe und die s-Butylgruppe.

Auch Alkylgruppen mit weiter außen liegender Verzweigung sind als Substituenten R¹ bis R⁴ gut geeignet, wie die i-Butyl-, die 3-Methyl-but-2-yl- und 4-Methylpentylgruppe.

Als cycloaliphatische Reste kommen C₃- bis C₁₀-monocyclische wie beispielsweise die Cyclopropyl-, Cyclobutyl-, Cyclopentyl-, Cyclohexyl und Menthylgruppen sowie bicyclische Reste wie die Norbornyl-, Pinanyl-, Bornylgruppe und Bicyclononylgruppe in beliebiger Verknüpfung des Ringgerüstes mit den Atomen E¹ und E² in Betracht. Vorzugsweise enthalten die cycloaliphatischen Reste insgesamt 5 bis 20 C-Atome, ganz besonders bevorzugt sind Cyclohexyl und Menthyl.

Ferner sind lineare Arylalkylgruppen mit jeweils 1 bis 6 C-Atomen im Alkylrest und 6 bis 14 C-Atomen im Arylrest geeignet, wie beispielsweise Benzyl.

Als Arylreste kommen aromatische Systeme mit 6 bis 20 C-Atomen in substituierter und unsubstituierter Form in Frage, beispielsweise Phenyl, Tolyl, p-Trifluormethylphenyl, Xylyl oder Anisyl, bevorzugt werden Phenyl und o-Methoxyphenyl eingesetzt.

Als Heteroarylreste sind ganz allgemein C₃- bis C₂₀-Verbindungen geeignet, die vorzugsweise 1 bis 3 Stickstoffatome pro Ring enthalten, z.B. Pyridyl, Pyrimidyl, Pyrazinyl oder Triazinyl sowie mit Alkyl oder Arylgruppen versehenes Heteroaryl.

Die Reste R¹ bis R⁴ können auch Atome aus der Gruppe IVA, VA, VIA oder VIIA des Periodensystems der Elemente enthalten, wie zum Beispiel Halogen, Sauerstoff, Schwefel, Stickstoff, Silicium, hier beispielsweise die Bis(trimethylsilyl)methylgruppe. Auch funktionelle Gruppen wie zum Beispiel Hydroxy, Alkoxy, Amino und Cyan, die sich unter den Polymerisationsbedingungen inert verhalten, kommen in diesem Zusammenhang in Betracht.

Bevorzugte Heterosubstituenten R¹ bis R⁴ sind C₃- bis C₃₀-siliciumorganische Reste, das heißt tetravalente Siliciumatome die einerseits an E¹ oder E² gebunden sind und deren übrige Valenzen mit drei kohlenstofforganischen Resten abgesättigt sind, wobei die Summe der Kohlenstoffatome dieser drei an Silicium gebundenen Reste im Bereich von drei bis dreißig liegt. Beispielsweise seien genannt die Trimethylsilyl-, t-Butyldimethylsilyl- oder Triphenylsilylgruppe, insbesondere die Trimethylsilylgruppe.

Die Reste R¹ bis R⁴ können in einer Metallkomplexverbindung (I) sowohl identisch sein als auch nur paarweise, z.B. R¹ = R² oder R¹ = R³ oder R³ = R⁴, übereinstimmen oder vollständig voneinander verschieden sein.

Die Reste R¹ bis R⁴ sollen vorzugsweise soweit raumerfüllend sein, daß das Zentralatom, z.B. das Palladiumatom, mit dem die Atome E¹ und E² den aktiven Komplex bilden, weithin abgeschirmt wird. Reste, welche dieser Forderung genügen, sind beispielsweise cycloaliphatische Reste sowie verzweigte aliphatische Reste, darunter besonders solche mit Verzweigung in α-Position.

Als Substituenten R⁵ sind zum Beispiel geeignet Wasserstoff sowie Substituenten, ausgewählt aus der Gruppe bestehend aus C₁- bis C₂₀-kohlenstofforganischen und C₃- bis C₃₀-siliciumorganischen Resten in substituierter und unsubstituierter Form. Unter die genannten kohlenstofforganischen Reste fallen u.a. geradkettige und verzweigte C₁- bis C₂₀- aliphatische Einheiten, wie Methyl, Ethyl, n-Propyl, i-Propyl, n-Butyl, i-Butyl, s-Butyl, t-Butyl sowie Pentyl, Hexyl, Octyl und deren Strukturanaloga, cycloaliphatische Einheiten, beispielsweise C₃- bis C₁₀-Monocyclen, wie Cyclopropyl, Cyclopentyl und Cyclohexyl, oder Bicyclen, wie Norbonyl, sowie C₆- bis C₂₀-Arylgruppen, die einfach oder mehrfach mit Alkyl-, Aryloder funktionellen Gruppen auf der Basis von Elementen aus der Gruppe IVA, VA, VIA oder VIIA des Periodensystems der Elemente, wie Silyl, Amino, Alkoxy, Halogen, substituiert sein können. Des weiteren kann R⁵ eine Aralkylgruppe, wie Benzyl, oder eine Heteroarylgruppe, wie Pyridyl oder Pyrimidyl, sein.

Außerdem stellt R⁵ z.B. eine eine funktionalisierte Endgruppe enthaltende C₁- bis C₂₀-Alkylenkette in substituierter und unsubstituierter Form dar, die gegebenenfalls auch Heteroatome, wie Sauerstoff oder Stickstoff, oder Aryleneinheiten, wie Phenylen, in der Alkylenkette enthalten kann. Bevorzugt ist eine Alkylengruppe -(CH₂)ₙ-Q, worin Q -SO₃^{⊖}, -CO₂^{⊖}, -CO₂R, -CONR₂, Halogen, insbesondere F, Cl, Br, I, Hydroxy, -OR₁-NR₂ oder -NR₃^{⊕} bedeuten und n = 5-30 ist. R steht ganz allgemein für einen Aryloder Alkylrest oder für Wasserstoff.

Weiterhin kann R⁵ -NR⁶R⁷ bedeuten, worin R⁶ und R⁷, unabhängig voneinander, Substituenten, ausgewählt aus der Gruppe bestehend aus C₁- bis C₂₀-kohlenstofforganischen und C₃- bis C₃₀-silicium-organischen Resten darstellen und wobei letztgenannte Reste die vorgehend unter R⁵ aufgeführten Substituenten einnehmen können. Bevorzugt stellen R⁶, R⁷ Methyl, Ethyl, i-Propyl, Phenyl oder Benzyl dar.

Als Heterosubstituenten R⁵ kommen auch C₃- bis C₃₀-silicium-organische Reste in Frage, wobei die Summe der Kohlenstoffatome der drei an das Siliciumatom gebundenen kohlenstofforganischen Reste im Bereich von 3 bis 30 liegt. Beispielsweise seien genannt die Trimethylsilyl-, t-Butyldimethylsilyl- und die Triphenylsilylgruppe.

Des weiteren stellt R⁵ zum Beispiel einen Rest der allgemeinen Formel (II) 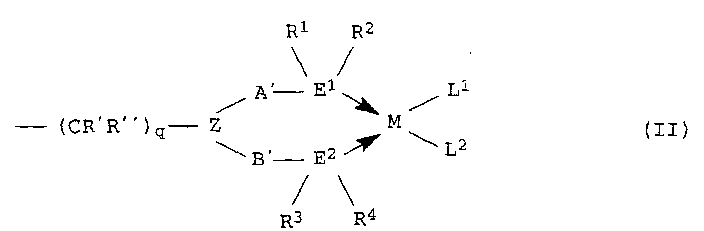 dar, in der q eine ganze Zahl von 0 bis 20 bedeutet und R', R'' Wasserstoff oder Substituenten, ausgewählt aus der Gruppe entstehend aus C₁- bis C₂₀-kohlenstofforganischen und C₃- bis C₃₀-siliciumorganischen Resten, darstellen. Die weiteren Substituenten Z, A', B', E¹, E², R¹ bis R⁴, M und L¹, L² in (II) entsprechen dabei in ihren Bedeutungen den zu Formel (I) gemachten Ausführungen, wobei in den Metallkomplexen (I) für den Fall, daß R⁵ = (II) ist, die beiden dann in (I) vorliegenden bidentaten Chelatliganden nicht identisch übereinstommen müssen. Vielmehr fallen auch solche Metallkomplexe unter den Gegenstand der vorliegenden Erfindung, bei denen die jeweiligen Substituenten teilweise oder vollständig nicht übereinstimmen. Demgemäß kommen zum Beispiel Verbindungen in Betracht wie 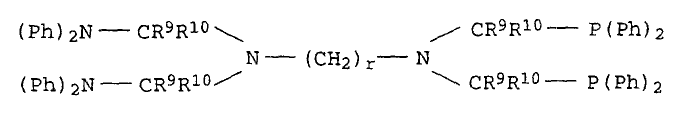 oder 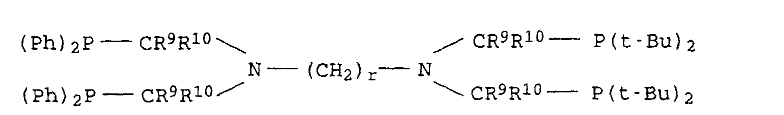 mit r = 0 bis 10
und R⁹, R¹⁰, unabhängig voneinander, die bereits vorhergehend beschriebenen Substituenten einnehmen können.

Bevorzugt werden als Reste R⁵ t-Butyl, Phenyl, o-Methoxyphenyl, p-Trifluormethylphenyl, 4-Aminophenyl, 4-N,N'-Dimethylaminophenyl, 4-Hydroxphenyl oder -(CH₂)ₙ-SO₃^{⊖}, -(CH₂)ₙ-NR₃^{⊕}, -(CH₂)ₙ-OH mit n = 1 bis 20, bevorzugt n = 5 bis 20 eingesetzt.

Geeignete formal geladene anorganische Liganden L¹, L² sind Hydrid, Halogenide, Sulfate, Phosphate oder Nitrate.

Vorzugsweise verwendet man Halogenide wie Chloride, Bromide, Iodide und insbesondere Chloride.

In einer bevorzugten Ausführungsform liegt in dem Metallkomplex (I) einer der Liganden L¹ und L² als Halogenid vor.

Des weiteren können L¹ und L² Carboxylate, wie Acetat, Trifluoracetat, Propionat, Oxalat, Citrat oder Benzoat, insbesondere Acetat, sein.

Geeignete formal geladene organische Liganden L¹, L² sind C₁- bis C₂₀-aliphatische Reste, C₃- bis C₃₀-cycloaliphatische Reste, C₇- bis C₂₀-Aralkylreste mit C₆- bis C₁₀-Arylrest und C₁- bis C₁₀-Alkylrest, C₆- bis C₂₀-aromatische Reste, wie beispielsweise Methyl, Ethyl Propyl, i-Propyl, t-Butyl, neo-Pentyl, Cyclohexyl, Benzyl, Neophyl, Phenyl und aliphatisch oder aromatisch substituierte Phenylreste.

Weiterhin eignen sich als formal geladene organische Liganden C₁- bis C₂₀-Carboxylate wie beispielsweise Acetat, Propionat, Oxalat, Benzoat, Citrat sowie Salze von organischen Sulfonsäuren wie Methylsulfonat, Trifluormethylsulfonat, p-Toluolsulfonat. Vorzugsweise verwendet man C₁- bis C₇-Carboxylate, Sulfonsäurederivate und insbesondere Acetat und p-Toluolsulfonat.

Als formal ungeladene Liganden L¹, L² sind generell Lewisbasen geeignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril oder Tetrahydrofuran.

Grundsätzlich können die Liganden L¹ und L² in jeder beliebigen Ligandkombination vorliegen, d.h. der Metallkomplex (I) kann zum Beispiel einen Nitrat- und einen formal geladenen organischen Liganden, wie t-Butyl, oder einen Acetonitril- und einen Halogenidliganden enthalten.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex (I) jedoch kein Anion X. Vorteilhafterweise werden Anionen X eingesetzt, die möglichst wenig nucleophil sind, d.h. eine möglichst geringe Tendenz haben, mit dem Zentralmetall M eine chemische Bindung einzugehen.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluormethylsulfonat, Trifluoracetat, Perchlorat oder p-Toluolsulfonat.

Besonders geeignet sind Chelatliganden der allgemeinen Formel (III), in der die Substituenten die folgende Bedeutung haben:
- E¹, E²: Stickstoff oder Phosphor,
- Z: Stickstoff oder Phosphor,
- R¹ bis R⁴: unabhängig voneinander, geradkettige oder verzweigte C₁- bis C₂₀-aliphatische Reste, wie Methyl, Ethyl, n-Propyl, i-Propyl, n-Butyl, i-Butyl, s-Butyl, t-Butyl sowie Pentyl, Hexyl, Octyl und deren Strukturanaloga, aliphatische C₃- bis C₁₀-monocyclische Reste, wie Cyclopropyl, Cyclobutyl, Cyclopentyl, Cyclohexyl, Menthyl, bicyclische Reste, wie Norbornyl, Pinanyl, Bornyl, Bicyclononyl, C₆- bis C₂₀-Arylreste in substituierter und unsubstituierter Form, wie Phenyl, Tolyl, Xylyl, o-Methoxyphenyl, p-Trifluormethylphenyl, C₃- bis C₂₀-Heteroarylreste, wie Pyridyl, Pyrimidyl, Pyrazinyl, Triazinyl, auch substituiert mit Alkyl- oder Arylgruppen, oder Aralkylreste mit jeweils 1 bis 6 C-Atomen im Alkylrest und 6 bis 14 C-Atomen im Arylrest,
- R⁵: Wasserstoff, geradkettige und verzweigte C₁- bis C₂₀-aliphatische Reste, wie Methyl, Ethyl, n-Propyl, i-Propyl, n-Butyl, i-Butyl, s-Butyl, 1-Butyl sowie Pentyl, Hexyl, Octyl und deren Strukturanaloga, C₃- bis C₁₀-aliphatische Monocyclen, wie Cyclopropyl, Cyclopentyl, Cyclohexyl, Bicyclen, wie Norbornyl, Pinanyl, Bornyl, Bicyclononyl, C₆- bis C₂₀-Arylgruppen, wie Phenyl, Naphthyl, die gegebenenfalls einfach oder mehrfach mit Alkyl-, Aryl- oder funktionellen Gruppen auf der Basis von Elementen der IV., V., VI. oder VII. Hauptgruppe des Periodensystems der Elemente, wie Silyl, Amino, Alkoxy, Hydroxy oder Halogen, substituiert sein können, Aralkylreste mit jeweils 1 bis 6 C-Atomen im Alkylrest und 6 bis 14 C-Atomen im Arylrest, wie Benzyl, C₃- bis C₂₀-Heteroarylreste, wie Pyridyl, Pyrimidyl, Pyrazinyl, Triazinyl, auch substituiert mit Alkyloder Arylgruppen, funktionalisierte C₅- bis C₃₀-Alkylenreste -(CH₂)ₙ-Q, auch substituiert, ggf. mit Heteroatomen, wie Sauerstoff oder Stickstoff, oder Aryleneinheiten, wie Phenylen, in der Alkylenkette, mit Q = -SO₃^{⊖}, CO₂^{⊖}, CO₂R, -CONR₂, Halogen, (F, Cl, Br, I), -NR₂, -OR, NR₃^{⊕} und n = 5-30, besonders bevorzugt 10-30, wobei R z.B. Wasserstoff, C₁- bis C₂₀-Alkyl oder C₆- bis C₂₀-Aryl bedeutet, Aminorest -NR⁶R⁷, mit R⁶, R⁷ wie vorgehend definiert. C₃- bis C₃₀-siliciumorganische Reste, wie Trimethylsilyl, t-Butyldimethylsilyl, Triphenylsilyl.
- A', B': C₁- bis C₄-Alkyleneinheiten, auch substituiert, wie Methylen, Ethylen, n-Propylen, Ethyliden, Propyliden, Benzyliden, Silylenreste -R'''SiR''''-, mit R''',R'''' als C₁- bis C₂-Alkyleneinheiten, auch substituiert, wobei die freien Valenzen am Silicium durch Alkylgruppen, wie Methyl, oder Arylgruppen, wie Phenyl, abgesättigt sind,
-NR⁸-Reste mit R⁸ als C₁- bis C₄-Alkyl, auch substituiert, wie Methyl, Ethyl, Aryl, wie Phenyl, ein ein-, zwei-, drei- oder vieratomiger Bestandteil eines aliphatischen oder aromatischen Ringsystems, wie die Methylen- oder Ethyleneinheit in Cyclopropyl, Cyclopentyl, Cyclohexyl.

Vorzugsweise verwendet man verbrückte Diphosphane (III) mit mindestens einem Stickstoffatom in der Brücke als Chelatligand, beispielsweise
Bis(diphenylphosphinomethyl)phenylamin,
Bis(diphenylphosphinomethyl)t-butylamin,
Bis(diphenylphosphinomethyl)methylamin,
Bis(dicyclohexylphosphinomethyl)phenylamin,
Bis(dicyclohexylphosphinomethyl)t-butylamin,
Bis(dicyclohexylphosphinomethyl)methylamin,
Bis(di-t-butylphosphinomethyl)phenylamin,
Bis(di-t-butylphosphinomethyl)t-butylamin,
Bis(di-t-butylphosphinomethyl)methylamin,
Bis(o-methoxyphenylphosphinomethyl)phenylamin,
Bis(o-methoxyphenylphosphinomethyl)t-butylamin,
Bis(o-methoxyphenylphosphinomethyl)methylamin,
Bis(diphenylphosphinoethyliden)phenylamin,
Bis(diphenylphosphinoethyliden)t-butylamin,
Bis(diphenylphosphinoethyliden)methylamin,
Bis(dicyclohexylphosphinoethyliden)phenylamin,
Bis(dicyclohexylphosphinoethyliden)t-butylamin,
Bis (dicyclohexylphosphinoethyliden)methylamin,
Bis(di-t-butylphosphinoethyliden)phenylamin,
Bis(di-t-butylphosphinoethyliden)t-butylamin,
Bis(di-t-butylphosphinoethyliden)methylamin,
Bis(o-methoxyphenylphosphinoethyliden)phenylamin,
Bis(o-methoxyphenylphosphinoethyliden)t-butylamin,
Bis(o-methoxyphenylphosphinoethyliden)methylamin,
Bis(diphenylphosphinobenzyliden)phenylamin,
Bis(diphenylphosphinobenzyliden)t-butylamin,
Bis(diphenylphosphinobenzyliden)methylamin,
Bis(dicyclohexylphosphinobenzyliden)phenylamin,
Bis(dicyclohexylphosphinobenzyliden)t-butylamin,
Bis(dicyclohexylphosphinobenzyliden)methylamin,
Bis(di-t-butylphosphinobenzyliden)phenylamin,
Bis(di-t-butylphosphinobenzyliden)t-butylamin,
Bis(di-t-butylphosphinobenzyliden)methylamin,
Bis(o-methoxyphenylphosphinobenzyliden)phenylamin,
Bis(o-methoxyphenylphosphinobenzyliden)t-butylamin,
Bis(o-methoxyphenylphosphinobenzyliden)methylamin,
Bis(diphenylphosphinopropyliden)phenylamin,
Bis(diphenylphosphinopropyliden)t-butylamin,
Bis(diphenylphosphinopropyliden)methylamin,
Bis(dicyclohexylphosphinopropyliden)phenylamin,
Bis(dicyclohexylphosphinopropyliden)t-butylamin,
Bis(dicyclohexylphosphinopropyliden)methylamin,
Bis(di-t-butylphosphinopropyliden)phenylamin,
Bis(di-t-butylphosphinopropyliden)t-butylamin,
Bis(di-t-butylphosphinopropyliden)methylamin,
Bis(o-methoxyphenylphosphinopropyliden)phenylamin,
Bis(o-methoxyphenylphosphinopropyliden)t-butylamin,
Bis(o-methoxyphenylphosphinopropyliden)methylamin.

Des weiteren sind, analog zu der aufgeführten Liste, Verbindungen geeignet, in denen R⁵ eine p-Hydroxyphenyl- oder eine C₃- bis C₁₀-Alkanolgruppe, wie 4-butanol, darstellt.

Des weiteren können auch Chelatliganden (III) eingesetzt werden, die an E¹ und E² nichtidentische Substituenten R¹ bis R⁴ aufweisen. In einer erfindungsgemäßen Ausführungsform stimmen die Reste R¹ und R² an E¹ bzw. R³ und R⁴ an E² jeweils überein, jedoch sind R¹, R² nicht identisch mit R³, R⁴.

Als solche geeignete Verbindungen seien beispielsweise genannt: (Diphenylphosphinomethyl)(dicyclohexylphosphinomethyl)phenylamin, (Diphenylphosphinomethyl)(di-t-butylphosphinomethyl)phenylamin, (Di-o-methoxyphenylphosphinomethyl)(dicyclohexylphosphinomethyl)-t-butylamin sowie alle weiteren Kombinationen der in der vorhergehenden Liste aufgeführten Aminsubstituenten, soweit diese zu Bisphosphinverbindungen führen.

Daneben kommt jede mögliche Kombination an Resten R¹ bis R⁴, die zu unsymmetrischen Chelatliganden führt, in Betracht.

Darüber hinaus seien insbesondere auch solche Chelatliganden aufgeführt, die im Rest R⁵ eine geladene funktionelle Gruppe tragen, beispielsweise
Bis(diphenylphosphinomethyl)(methylsulfonat)amin,
Bis(diphenylphosphinomethyl)2-(ethyl-sulfonat)amin,
Bis(diphenylphosphinomethyl)3-(propyl-sulfonat)amin oder
Bis(diphenylphosphinomethyl)4-(butyl-sulfonat)amin,
Bis(Diphenylphosphinomethyl)12-(dodecenyl-sulfonat)amin oder
Bis(diphenylphosphinomethyl)18-(octadecenyl-sulfonat)amin.

Die Chelatliganden (III) können zur Herstellung der erfindungsgemäßen Metallkomplexe (I) verwendet werden.

Die Herstellung der Chelatphosphane (III) kann wie beschrieben in A.L. Balch, M.M. Olmstead, S.P. Rowley, Inorg. Chim. Acta, 1990, 168, 255-264 bzw. J. Fawcett, P.A.T. Hoye, R.D.W. Kemmitt, D.J. Law, D.R. Russell, J. Chem. Soc., Dalton Trans. 1993, 2563 - 2568 erfolgen. Beispielsweise setzt man Diphenylphosphan mit Paraformaldehyd und Anilin in Toluol bei 65°C um und erhält nach einer Reaktionszeit von etwa 4 h das Chelatphosphan in hoher Ausbeute.

Die erfindungsgemäßen Metallkomplexe der allgemeinen Formel (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall-(Alkyl)(Halogenide), Übergangsmetall-Diorganyle, gebunden sind, gegen die erfindungsgemäßen Chelatliganden der allgemeinen Formel (III)in der vorhergehend beschriebenen Bedeutung.

Die Reaktion wird im allgemeinen in einem Lösungsmittel, wie beispielsweise Dichlormethan bei Temperaturen im Bereich von -78 bis 40°C durchgeführt.

Des weiteren können neutrale Metallkomplexe (I), in denen L¹ und L² Carboxylat, z.B. Acetat, bedeuten, durch Umsetzung von beispielsweise Pd(OAc)₂ mit den beschriebenen Chelatliganden in Toluol oder Aceton bei Raumtemperatur hergestellt werden.

Als weitere Synthesemethode kommt die Umsetzung der Chelatkomplexe der allgemeinen Formel (III) mit Organometallverbindungen der Gruppen IA, IIA, IVA und IIB in Frage, beispielsweise C₁- bis C₆-Alkyle der Metalle Lithium, Aluminium, Magnesium, Zink, wobei formal geladene anorganische Liganden L¹, L² wie vorher definiert, gegen formal geladene aliphatische, cycloaliphatische oder aromatische Liganden L¹, L² wie ebenfalls vorher definiert, ausgetauscht werden. Die Reaktion wird im allgemeinen in einem Lösungsmittel, wie beispielsweise Diethylether oder Tetrahydrofuran bei Temperaturen im Bereich von -78 bis 65°C durchgeführt.

Monokationische Komplexe der allgemeinen Formel (I) (p = 1) werden durch Umsetzung von (Chelatligand)Metall(Halogeno)(Organo)-Komplexen der allgemeinen Formel (I), in der L¹ Halogen und L² die vorher definierten formal geladenen organischen Liganden (unter Ausschluß der Anionen organischer Säuren) bedeuten, mit Metallsalzen MX gebildet. Desweiteren können monokationische Komplexe der allgemeinen Formel (I) durch Umsetzung von (Chelatligand) Metall (dihalogeno)-Komplexen mit stöchiometrischen Mengen eines Metallsalzes MX erhalten werden. Die Umsetzungen werden im allgemeinen in koordinierenden Lösungsmitteln wie beispielsweise Acetonitril oder Tetrahydrofuran bei Temperaturen im Bereich von -78 bis 65 °C durchgeführt.

Es ist vorteilhaft, wenn die Metallsalze MX folgende Kriterien erfüllen. Das Metall M soll vorzugsweise schwer lösliche Metallchloride bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind Silbertetrafluoroborat, Silberhexafluorophosphat, Silbertrifluormethansulfonat, Silberperchlorat, Silberparatoluolsulfonat, Silbertrifluoracetat und Silbertrichloracetat.

Die dikationischen Komplexe (p = 2) werden analog den monokationischen Komplexen hergestellt, nur daß jetzt anstatt der (Chelatligand)Metall(Halogene)(Organo)-Komplexe die (Chelatligand)Metall(Di-Halogeno)-Komplexe als Vorstufe eingesetzt werden.

Als weiteres Verfahren zur Herstellung der dikationischen Komplexe (I) kommt die Umsetzung von [G₄M]X₂ mit den eingangs definierten Chelatliganden der allgemeinen Formel (III) in Frage. Hierbei bedeutet G gleiche oder unterschiedliche schwache Liganden wie beispielsweise Acetonitril, Benzonitril oder 1,5-Cyclooctadien, M und X haben die vorher definierte Bedeutung.

Ein bevorzugtes Verfahren zur Herstellung der Metallkomplexe der allgemeinen Formel (I) ist die Umsetzung der Dihalogenmetallvorläufer-Komplexe mit Silbersalzen mit nicht-koordinierenden Anionen.

Das Verhältnis der Katalysatorbestandteile zueinander wird im allgemeinen so gewählt, daß das molare Verhältnis von Metallkomplex (I) (Bestandteil a)) zu Lewis- und/oder Protonensäure (Bestandteil b)) im Bereich von 0,01:1 bis 10:1, bevorzugt im Bereich von 0,1:1 bis 1:1 liegt.

Unter den Bestandteil a) fällt sowohl der ausschließliche Metallkomplex (I) als auch eine Mischung, bestehend aus dem definierten Metallkomplex (I) und einem Anteil an freier Chelatverbindung (III).

Das molare Verhältnis von Metallkomplex (I) zum Chelatliganden (III) liegt demgemäß üblicherweise im Bereich von 0,01:1 bis 10:1, bevorzugt im Bereich von 0,1:1 bis 2:1. Die erfindungsgemäßen Katalysatorsysteme können zur Herstellung von Copolymerisaten aus Kohlenmonoxid und olefinisch ungesättigten Monomerverbindungen verwendet werden.

Die Monomere werden im allgemeinen alternierend in das Copolymer eingebaut.

Als olefinisch ungesättigte Monomerverbindungen kommen grundsätzlich alle Monomere dieser Verbindungsklasse in Betracht.

Bevorzugt sind Ethylen und C₃- bis C₁₀-Alk-1-ene wie hauptsächlich Propen, außerdem Butadien, sowie daneben Cycloolefine wie Cyclopenten, Cyclohexen, Norbornen und Norbornadien und seine Derivate.

Unter den olefinisch ungesättigten aromatischen Monomeren seien in erster Linie Styrol und α-Methylstyrol genannt.

Besondere Bedeutung haben ferner Acrylsäure und Methacrylsäure sowie deren Derivate, darunter insbesondere die Nitrile, die Amide und die C₁-C₆-Alkylester, wie beispielsweise Ethylacrylat, n-Butylacrylat, t-Butylacrylat, Methylmethacrylat.

Weitere geeignete Monomere sind Vinylchlorid, Vinylacetat, Vinylpropionat, Maleinsäureanhydrid und N-Vinylpyrrolidon.

Selbstverständlich können auch Mischungen verschiedener Monomerer eingesetzt werden, wobei das Mischungsverhältnis im allgemeinen nicht kritisch ist.

Zur Herstellung von Copolymerisaten aus Kohlenmonoxid und olefinisch ungesättigten Monomerverbindungen können die Monomeren in Gegenwart eines Katalysators copolymerisiert werden, dessen aktive Masse gebildet wird aus
a) einem Metallkomplex der allgemeinen Formel (I) 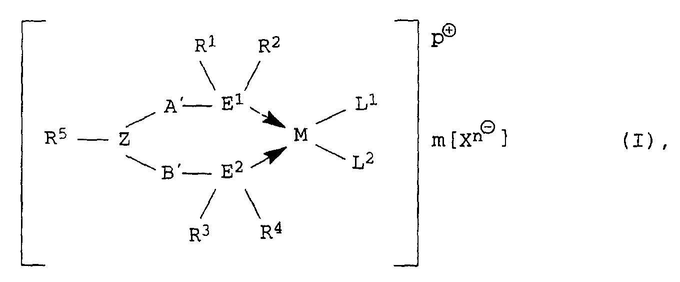 in welcher die Substituenten und Indizes die folgende Bedeutung haben:
   - R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 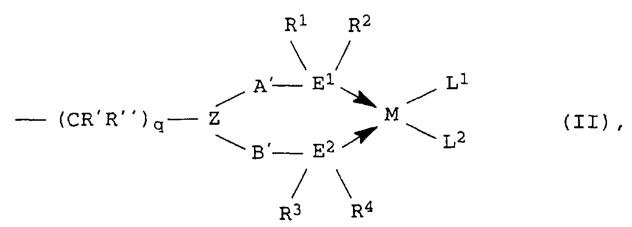 in der
   q eine ganze Zahl von 0 bis 20 bedeutet und
   R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Stubstituenten in (II) wie in (I) die nachfolgende Bedeutung haben,
   - M: ein Metall aus der Gruppe VIIIB des Periodensystems der Elemente,
   - E¹, E²: ein Element aus der Gruppe VA des Periodensystems der Elemente,
   - Z: ein Element aus der Gruppe VA des Periodensystems der Elemente,
   - R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
   - A', B': C₁-C₄-Alkyleneinheiten in substituierter und unsubstituierter Form, silylenverbrückte organische Reste sowie NR⁸-Reste,
   - R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
   - L¹, L²: formal geladene oder neutrale Liganden,
   - X: formal ein- oder mehrwertige Anionen,
   - p: 0, 1, 2, 3 oder 4,
   - m, n: 0, 1, 2, 3 oder 4,
   - wobei: p = m x n und
b) eine oder mehrere Lewis- oder Protonensäuren oder eines Gemisches von Lewis- und Protonensäuren.

Copolymerisate aus Kohlenmonoxid und olefinisch ungesättigten Verbindungen können ebenfalls durch Umsetzung der Monomeren in Gegenwart eines Metallkomplexes der allgemeinen Formel (I) 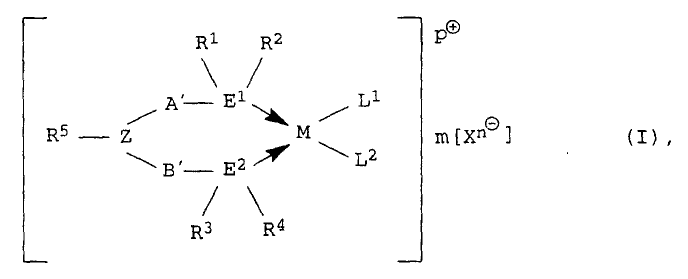 in welcher die Substituenten und Indizes die folgende Bedeutung haben
- R⁵: Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 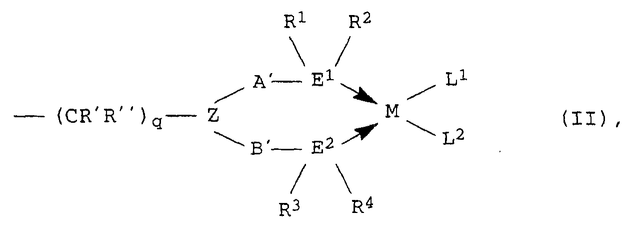 in der
q eine ganze Zahl von 0 bis 20 bedeutet und
R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und die weiteren Stubstituenten in (II) wie in (I) die nachfolgende Bedeutung haben,
- M: ein Metall aus der Gruppe VIIIB des Periodensystems der Elemente,
- E¹, E¹: ein Element aus der Gruppe VA des Periodensystems der Elemente,
- Z: ein Element aus der Gruppe VA des Periodensystems der Elemente,
- R¹ bis R⁴: Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
- A', B': C₁-C₄-Alkyleneinheiten in substituierter und unsubstituierter Form, silylenverbrückte organische Reste sowie NR⁸-Reste,
- R⁶ bis R⁸: Wasserstoff oder Substituenten, ausgewählt aus der Gruppe bestehend aus C₁- bis C₂₀-kohlenstofforganischen und C₃- bis C₃₀-siliciumorganischen Resten,
- L¹, L²: neutrale Liganden, insbesondere Acetonitril, Methanol, Wasser,
- X: formal ein- oder mehrwertige Anionen, insbesondere Perchlorat, Trifluoracetat, p-Toluolsulfonat, Tetrafluoraborat, Trifluormethylsulfonat,
- p: 0, 1, 2, 3 oder 4,
- m, n: 0, 1, 2, 3 oder 4,
- wobei: p = m x n,
erhalten werden.

Als neutrale Liganden L¹, L² werden beim vorgehend beschriebenen Verfahren bevorzugt Acetonitril, Tetrahydrofuran, Wasser und Methanol eingesetzt, geeignete Anionen X sind insbesondere Perchlorat- und Trifluoracetatanionen.

Als ein weiteres Verfahren zur Herstellung von Copolymerisaten aus Kohlenmonoxid und olefinisch ungesättigten Verbindungen kommt die Umsetzung der Monomeren in Gegenwart eines Katalysators in Frage, dessen aktive Masse gebildet wird aus
i) einem Metall M, ausgewählt aus der Gruppe VIIIB des Periodensystems der Elemente, das in Salzform oder als Komplexsalz vorliegt,
ii) einem Chelatliganden der allgemeinen Formel (III) 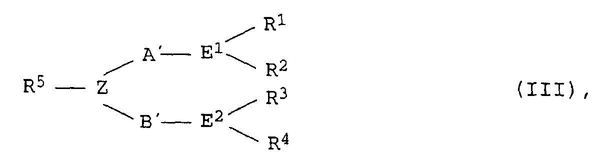 in welcher die Substituenten und Indizes die vorhergehend beschriebene Bedeutung haben, und
iii) einer oder mehrerer Protonen- oder Lewissäuren oder eines Gemisches von Protonen- und Lewissäure.

Als Salze von üblicherweise zweiwertigen Metallen M sind Halogenide, Sulfate, Phosphate, Nitrate und Carboxylate, wie Acetate, Propionate, Oxalate, Citrate, Benzoate, sowie Sulfonsäuresalze wie zum Beispiel Methylsulfonate, Trifluormethylsulfonat und p-Toluolsulfonat geeignet. Vorzugsweise verwendet man Carboxylate, Sulfonsäurederivate und insbesondere Acetate.

Besonders geeignete Katalysatorkomponenten i) sind Palladiumdicarboxylate, vorzugsweise Palladiumdiacetat, Palladiumdipropionat, Palladiumbis(trifluoracetat) und Palladiumoxalat, sowie Palladiumsulfonate, vorzugsweise Palladiumbis(trifluormethansulfonat), Palladiumbis(methansulfonat), Palladiumbis(p-Toluolsulfonat), insbesondere verwendet man Palladiumdiacetat.

Als Katalysatorbestandteile b) bzw. iii) können Lewis- und Protonensäuren und deren Mischungen eingesetzt werden.

Geeignete Protonensäuren b) bzw. iii) sind starke Mineralsäuren, vorzugsweise mit einem pKa-Wert kleiner als 3, wie Schwefelsäure und Perchlorsäure sowie starke organische Säuren, beispielsweise Trichlor- und Trifluoressigsäure sowie die Sulfonsäuren Methansulfonsäure, p-Toluolsulfonsäure und Benzolsulfonsäure.

Weiterhin sind die sauer wirkenden Salze starker Säuren mit schwachen Basen, wie beispielsweise Ammoniumsalze der vorher genannten Säuren geeignet.

Beispiele für geeignete Lewissäuren sind Halogenide der Elemente der Gruppe IIIA des Periodensystems der Elemente, zum Beispiel Bortrifluorid, Bortrichlorid, Aluminiumtrifluorid, Aluminiumtrichlorid, Halogenide der Elemente der Gruppe VA des Periodensystems der Elemente wie Phosphorpentafluorid, Antimonpentafluorid, sowie Halogenide der Metalle der Nebengruppe IVB des Periodensystems der Elemente, wie beispielsweise Titantetrachlorid oder Zirconiumtetrachlorid. Weitere geeignete Lewissäuren sind organisch substituierte Lewissäuren, zum Beispiel Tris(pentafluorphenyl)boran.

Vorzugsweise verwendet man als Lewis-Säuren Bortrifluorid, Antimonpentafluorid oder Tris(pentafluorphenyl)boran.

Besonders bevorzugte Komponenten b) bzw. iii) sind solche, welche ein schwach koordinierendes konjugiertes Anion besitzen, d.h. ein Anion welches nur eine schwache Bindung zum Zentralmetall des Komplexes ausbildet, wie Tetrafluoroborat, Hexafluorophosphat, Perchlorat,Trifluoracetat, Trifluormethylsulfonat, p-Tosylat und Borate, wie Brenzkatechinatoborat und Tetraarylborat, wobei als Arylgruppe insbesondere 2,5-Dimethylphenyl-, 2,5-Di-trifluormethyl-phenyl- oder Pentafluorphenyl in Frage kommen.

Als Komponente ii) enthalten die Katalysatorsysteme eine Chelatverbindung (III), die bereits bei der Abhandlung des aktiven Bestandteils a) des erfindungsgemäßen Katalysatorsystems beschrieben wurde.

Bei der *in-situ* Generierung der Polymerisationskatalysatoren setzt man die Metalle M üblicherweise zweiwertig in Form ihrer Salze ein und bringt sie mit der Chelatverbindung ii) der allgemeinen Formel (III) und der/den Säuren iii) in Berührung. Dies kann vor dem Kontakt der so erhältlichen katalytisch aktiven Masse mit dem Monomeren geschehen, im allgemeinen außerhalb des Polymerisationsreaktors. Die Umsetzung der Einzelkomponenten Metallsalz i), Chelatverbindung ii) und Säure iii) kann aber auch im Polymerisationsreaktor in Gegenwart der Monomeren durchgeführt werden.

Das Verhältnis der Katalsatorbestandteile i), ii) und iii) zueinander wird im allgemeinen so gewählt, daß das molare Verhältnis der Metallverbindung i) zur Komponente ii) 0,01 : 1 bis 10 : 1, bevorzugt 0,1 : 1 bis 2 : 1, und das molare Verhältnis der Metallverbindung i) zur Säure iii) 0,01 : 1 bis 100 : 1, bevorzugt 0,1 : 1 bis 1 : 1 beträgt.

Die erfindungsgemäßen Copolymerisationsverfahren zur Herstellung von Kohlenmonoxidcopolymeren können sowohl absatzweise als auch kontinuierlich durchgeführt werden.

Als geeignete Reaktionsparameter zur Herstellung Copolymeren aus Kohlenmonoxid und olefinisch ungesättigten Verbindungen haben sich Drücke von 100 bis 500000 kPa, vorzugsweise 500 bis 350000 kPa und insbesondere 1000 bis 10000 kPa, Temperaturen von -50 bis 400°C, bevorzugt 10 bis 250°C und insbesondere 20 bis 150°C als geeignet erwiesen.

Die Polymerisationsreaktionen lassen sich in der Gasphase in Wirbelschicht oder gerührt, in Suspension, in flüssigen und in überkritischen Monomeren und in unter den Polymerisationsbedingungen inerten Lösungsmitteln durchführen.

Als Lösungs- bzw. Suspensionsmittel für die erfindungsgemäßen Verfahren sind insbesondere solche geeignet, die protisch sind oder die in Anteilen eine protische Komponente enthalten. Beispielsweise kommen niedermolekulare Alkohole, wie Methanol, Ethanol, i-, n-Propanol oder Wasser in Frage, bevorzugt wird Methanol als Lösungs-/Suspensionsmittel oder als Lösungsmittel-/Suspensionsmittelkomponente verwendet.

Die Polymerisationsreaktionen können auch im praktisch alkoholoder wasserfreien Polymerisationsmedium durchgeführt werden. Das bedeutet, daß dem Reaktionsgemisch aus Monomeren, Katalysator und gegebenenfalls inertem Lösungs- oder Suspensionsmittel, außer gegebenenfalls den Liganden L¹ oder L², keine weiteren Alkoholoder Wasseranteile enthalten.

Geeignete inerte Lösungs- und Suspensionsmittel sind solche, die keine Hydroxylgruppe im Molekül enthalten, also Ether wie Diethylether, Tetrahydrofuran, aromatische Lösungsmittel wie Benzol, Toluol, Ethylbenzol, Chlorbenzol, aliphatische Kohlenwasserstoffe wie i-Butan oder chlorierte aliphatische Kohlenwasserstoffe wie Dichlormethan, 1,1,1-Trichlormethan oder Gemische der genannten Verbindungen.

Als gut geeignetes Polymerisationsverfahren hat sich die Vorlage des Katalysators im inerten Lösungsmittel und die anschließende Zugabe der Monomeren und Polymerisation bei einer Temperatur im Bereich von 20 bis 150°C und einem Druck im Bereich von 1000 bis 10000 kPa herausgestellt.

Die erhaltenen Kohlenmonoxid-Copolymeren können mit einer engen Molekulargewichtsverteilung erhalten werden. Diese Copolymeren weisen Werte für M_{w}/Mₙ im Bereich von 1,02 bis 6,0, bevorzugt von 1,05 bis 4,5 (bestimmt mittels Gelpermeationschromatographie an einem Polymethylmethacrylat-Standard).

Die beschriebenen Copolymerisationsverfahren können ebenfalls in Gegenwart eines Oxidationsmittels, wie Benzochinon oder Naphthochinon und/oder Wasserstoff durchgeführt werden.

Die erhaltenen Kohlenmonoxid-Copolymeren lassen sich mittels Spritzguß, Extrusion oder Spincoating verarbeiten. Außerdem gelingt die Beschichtung metallischer, keramischer und anderer Oberflächen, z.B. aus Kunststoffmaterialien.

Die erhaltenen Kohlenmonoxid-Copolymeren eignen sich zur Herstellung von Fasern, Folien, Formkörpern und Beschichtungen.

Über die erfindungsgemäßen Katalysatorsysteme auf der Basis von Metallkomplexen (I) besteht ein einfacher Zugang zu einer Vielzahl an geringfügig modifizierten Katalysatoren für die Copolymerisation von Kohlenmonoxid mit olefinisch ungesättigten Verbindungen. Weiterhin kommen halogenfreie, unproblematisch zu handhabende und leicht zugängliche, d.h. kostengünstige Ausgangsverbindungen zum Einsatz, so daß selbst ein umfangreiches Katalysatorscreening möglich wird.

### Beispiele

### Abkürzungen:

- Pd(OAc)2:: Palladiumdiacetat
- dpmpa:: Bis(diphenylphosphinomethyl)phenylamin
- dpmba:: Bis(diphenylphosphinomethyl)t-butylamin
- dpmsa:: Bis(diphenylphosphinomethyl)2-(ethyl-triethylammoniumsulfonat)amin
- dpmma:: Bis(diphenylphosphinomethyl)methylamin
- dpmta:: Bis(diphenylphosphinomethyl)(triphenylsilan)amin
- dpmha:: Bis(diphenylphosphinomethyl)(p-hydroxyphenyl)amin
- dpmaa:: Bis(diphenylphosphinomethyl)(dimethylamino)amin
- P-TSS:: p-Toluolsulfonsäure
- PK:: Polyketon

### A. Allgemeine Vorschrift für die Herstellung von Metallkomplexen (I)

Der Metalldihalogenid-Chelatkomplex (MC) wurde in 20 ml Acetonitril gelöst. Danach wurde das Silbersalz (SZ) zugegeben, die Mischung 18 h bei Raumtemperatur gerührt, der gebildete Niederschlag abfiltriert und aus dem Filtrat durch Einengen und Zugeben von Diethylether das Produkt isoliert.

### B. Herstellungsbeispiele für kationische Metallkomplexe

### a) Herstellung von Monokation-Komplexen

### Beispiel 1: [(dpmpa)PdCl(MeCN)](ClO₄)

| | | | |
|---|---|---|---|
| (MC) | (dpmpa)PdCl₂ | 642 mg | 0,963 mmol |
| (SZ) | AgClO₄ | 221 mg | 1,066 mmol |

Ausbeute: 407 mg (48 %)

| Elementaranalyse | berechnet: | gefunden: |
|---|---|---|
| | C: 52,9; H: 4,18; | C: 51,0; H: 3,9; |
| | O: 8,29; N: 3,63; | O: 9,2; N: 2,9; |
| | P: 8,03; | P: 7,5; Pd: 13,0. |
| | Pd: 13,79. | |

### b) Herstellung von Dikation-Komplexen

### Beispiel 2:

i) [(dpmpa)Pd(MeCN)₂](ClO₄)₂

| | | | |
|---|---|---|---|
| (MC) | (dpmpa)PdCl₂ | 868 mg | 1,302 mmol |
| (SZ) | AgClO₄ | 638 mg | 2,831 mmol |

Ausbeute: 1,1 g (88 %)

| Elementaranalyse | berechnet: | gefunden: |
|---|---|---|
| | C: 49,31; | C: 47,4; H: 4,2; |
| | H: 4,02; O: 4,79; | O: 4,5; N: 15,0; |
| | N: 14,80; | P: 6,7; Pd: 11,3. |
| | P: 7,06; | |
| | Pd: 12,14. | |

ii) [(dpmpa)Pd(MeCN)₂] (PF₆)₂

| | | | |
|---|---|---|---|
| (MC) | (dpmpa)pdCl₂ | 1000 mg | 1,5 mmol |
| (SZ) | AgPF₆ | 834 mg | 3,3 mmol |

Ausbeute: 1,3 g (90 %)

| Elementaranalyse | berechnet | gefunden |
|---|---|---|
| | C: 44,67 | 42,5 |
| | H: 3,64 | 3,8 |
| | N: 4,34 | 4,5 |
| | P: 12,80 | 12,4 |
| | Pd: 10,99 | 10,4 |

iii) [(dpmpa)Pd(MeCN)₂] (BF₄)₂

| | | | |
|---|---|---|---|
| (MC) | (dpmpa)PdCl₂ | 1000 mg | 1,5 mmol |
| (SZ) | AgBF₄ | 642 mg | 3,3 mmol |

Ausbeute: 1,21 g (95 %)
iv) [(dpmpa)Pd(MeCN)₂] (SO₃CF₃)₂

| | | | |
|---|---|---|---|
| (MC) | (dpmpa)PdCl₂ | 1000 mg | 1,5 mmol |
| (SZ) | AgSO₃CF₃ | 848 mg | 3,3 mmol |

Ausbeute: 1,45 g (99 %)
v) [(dpmpa)Pd(MeCN)₂] (CO₂CF₃)₂

| | | | |
|---|---|---|---|
| (MC) | (dpmpa)PdCl₂ | 1000 mg | 1,5 mmol |
| (SZ) | AgCO₂CF₃ | 729 mg | 3,3 mmol |

Ausbeute: 0,56 g (41 %)

| Elementaranalyse | berechnet | gefunden |
|---|---|---|
| | C: 53,14 | 51,9 |
| | H: 4,90 | 3,7 |
| | N: 4,65 | 4,9 |
| | P: 6,85 | 7,2 |
| | Pd: 11,77 | 12,6 |

vi) [(dpmpa)Pd(MeCN)₂] (SO₃C₆H₄CH₃)₂

| | | | |
|---|---|---|---|
| (MC) | (dpmpa)PdCl₂ | 1000 mg | 1,5 mmol |
| (SZ) | AgSO₂C₆H₄CH₃ | 920 mg | 3,3 mmol |

Ausbeute: 1,16 g (76 %)

| Elementaranalyse | berechnet | gefunden |
|---|---|---|
| | C: 58,85 | 56,6 |
| | H: 4,84 | 4,7 |
| | N: 4,12 | 4,5 |
| | P: 6,07 | 5,9 |
| | Pd: 10,43 | 9,9 |

### Beispiel 3:

i) [(dpmba)Pd(MeCN)₂] (ClO₄)₂

| | | | |
|---|---|---|---|
| (MC) | (dpmba)PdCl₂ | 1,65 g | 22,55 mmol |
| (SZ) | AgClO₄ | 1,262 g | 5,60 mmol |

Ausbeute: 2,215 g (100 %)
ii) [(dpmba)Pd(MeCM)₂] (PF₆)₂

| | | | |
|---|---|---|---|
| (MC) | (dpmpa)PdCl₂ | 1000 mg | 1,55 mmol |
| (SZ) | AgPF₆ | 862 mg | 3,41 mmol |

Ausbeute: 1,17 g (80 %)
iii) [(dpmba)Pd(MeCN)₂] (BF₄)₂

| | | | |
|---|---|---|---|
| (MC) | (dpmba)PdCl₂ | 1000 mg | 1,55 mmol |
| (SZ) | AgBF_{4 ,} | 664 mg | 3,41 mmol |

Ausbeute: 1,18 g (87 %)

| Elementaranalyse | berechnet | gefunden |
|---|---|---|
| | C: 49,1 | 47,6 |
| | H: 4,73 | 4,7 |
| | N: 4,05 | 4,9 |
| | P: 7,45 | 7,1 |
| | Pd: 12,8 | 11,8 |

iv) [(dpmba)Pd(MeCN)₂] (SO₃CF₃)₂

| | | | |
|---|---|---|---|
| (MC) | (dpmba)PdCl₂ | 1000 mg | 1,55 mmol |
| (SZ) | AgSO₃CF₆ | 876 mg | 3,41 mmol |

Ausbeute: 1,0 g (67 %)

| Elementaranalyse | berechnet | gefunden |
|---|---|---|
| | C: 45,22 | 44,3 |
| | H: 4,11 | 4,3 |
| | N: 4,39 | 4,4 |
| | P: 6,48 | 6,5 |
| | Pd: 11,13 | 11,0 |

v) [(dpmba)Pd(MeCN)₂] (CO₂CF₃)₂

| | | | |
|---|---|---|---|
| (MC) | (dpmba)PdCl₂ | 1000 mg | 1,55 mmol |
| (SZ) | AgCO₂CF₃ | 753 mg | 3,41 mmol |

Ausbeute: 1,36 g (99 %)
vi) [(dpmba)Pd(MeCN)₂] (SO₃C₆H₄CH₃)₂

| | | | |
|---|---|---|---|
| (MC) | (dpmba)PdCl₂ | 1000 mg | 1,55 mmol |
| (SZ) | AgSO₃C₆H₄CH₃ | 952 mg | 3,41 mmol |

Ausbeute: 1,1 g (71 %)

| Elementaranalyse | berechnet | gefunden |
|---|---|---|
| | C: 57,63 | 55,6 |
| | H: 5,34 | 5,1 |
| | N: 4,20 | 2,6 |
| | P: 6,19 | 6,3 |
| | Pd: 10,64 | 10,1 |

### c) Herstellung von Neutralkomplexen

### Beispiel 4:

### (c₁) Vorschrift für die Herstellung von definierten Pd(OAc)₂-Komplexen ausgehend von Pd(OAc)₂

Pd(OAc)₂ wurde in 100 ml Aceton gelöst, für 2 h bei Raumtemperatur gerührt und anschließend filtriert. Zur erhaltenen Lösung gab man den Chelatliganden suspendiert in 40 ml Aceton. Der sich bildende Palladium-Komplex fiel als gelber Feststoff aus, wurde abgefrittet und im Vakuum getrocknet.
i) (dpmpa)Pd(OAc)₂

| | | |
|---|---|---|
| dpmpa | 1,957 g | 4,0 mmol |
| Pd(OAc)₂ | 0,99 g | 4,4 mmol |

Ausbeute: 2,07 g (72 %)
ii) [(dpmta)Pd(OAc)₂

| | | |
|---|---|---|
| Pd(OAc)₂ | 0,17 g | 0,744 mmol |
| dpmta | 0,5 g | 0,744 mmol |

Ausbeute: 0,62 g (75 %)
iii) dpmmaPd(OAc)₂

| | | |
|---|---|---|
| Pd(OAc)₂ | 0,47 g | 2,08 mmol |
| dpmma | 0,86 g | 2,08 mmol |

Ausbeute: 0,89 g (67 %)

### c₂) Vorschrift für die Herstellung von definierten Pd(OAc)₂-Komplexen ausgehend von PdCl₂-Komplexen

Der Chelatphosphan-PdCl₂-Komplex (MC) wurde in 10 ml Methylenchlorid gelöst und mit Silberacetat (SZ) versetzt. Die erhaltene Suspension wurde über Nacht gerührt, das Lösungsmittel bis auf die Hälfte reduziert und der Chelatphosphanpalladiumacetat-Komplex durch Zugabe von Diethylether ausgefällt. Filtration unter Argon und Trocknen im Hochvakuum lieferte den gewünschten Chelatkomplex.

### Beispiel 5:

i) dpmbaPd(OAc)₂

| | | | |
|---|---|---|---|
| (MC) | PdmbaPdCl₂ | 1,0 g | 1,55 mmol |
| (SZ) | AgOAc | 0,57 g | 3,41 mmol |

Ausbeute: 0,93 g (87 %)
ii) dpmhaPd(OAc)₂

| | | | |
|---|---|---|---|
| (MC) | dpmhaPdCl₂ | 1,0 g | 1,46 mmol |
| (SZ) | AgOAc | 0,54 g | 3,25 mmol |

Ausbeute: 0,98 g (92 %)
iii) dpmsaPd(OAc)₂

| | | | |
|---|---|---|---|
| (MC) | dpmsaPdCl₂ | 0,5 g | 0,62 mmol |
| (SZ) | AgOAc | 0,23 g | 1,36 mmol |

Ausbeute: 0,53 g (100 %)

### Beispiele 6 bis 40

### C. Polymerisationsverfahren

### 1) in-situ Generierung des Katalysators

### Allgemeine Polymerisationsbedingungen

In einem 0,3 l-Autoklav wurden Methanol, Palladiumdiacetat, dpmpa und p-Toluolsulfonsäure vorgelegt. Danach wurden Ethylen und Kohlenmonoxid bei der gewählten Reaktionstemperatur zu dem gewünschten Gesamtdruck aufgepreßt. Temperatur und Druck der Monomeren wurden während der Reaktionsdauer konstant gehalten. Die Polymerisation wurde durch Abkühlen und Entspannen des Autoklaven abgebrochen und das Lösungsmittel abfiltriert. Das Polyketon wurde bei Raumtemperatur unter Vakuum getrocknet.

Die Verfahrensparameter, eingesetzte Mengen an Katalysator und Lösungsmittel sowie die erhaltenen Mengen an Polymerisat und deren Eigenschaften sind der Tabelle 1 (Beispiele 6 - 10) zu entnehmen.

**Tabelle 1:**

| Bsp. Nr. | Katalysator-Komponenten (mmol) | Methanol | p, T (bar,°C) | Dauer (h) | Produkt Menge | kg PK/g Pd | Smp. (°C) |
|---|---|---|---|---|---|---|---|
| 6 | 0,073 Pd(OAc)₂ 0,274 dpmpa 0,73 p-TSS | 100 g | 60,85 | 15 | 76,84 g | 10,13 | 251-253 |
| 7 | 0,037 Pd(OAc)₂ 0,137 dpmpa 0,123 p-TSS | 50 g | 60,85 | 15 | 71,87 g | 18,95 | 259 |
| 8 | 0,037 Pd(OAc)₂ 0,137 dpmpa 0,123 p-TSS | 50 g | 80,85 | 10 | 61,69 g | 16,27 | 249 |
| 9 | 0,037 Pd(OAc)₂ 0,137 dpmpa 0,123 p-TSS | 50 g | 50,85 | 10 | 34,68 g | 9,15 | 250-251 |
| 10 | 0,037 Pd(OAc)₂ 0,274 dpmpa 0,0 p-TSS | 100 g | 60,85 | 15 | 0 g | 0 | n.b. |

### 2) Copolymerisationen mit definierten kationischen Palladiumkomplexen

### a) Copolymerisation im 0,3 l-Autoklaven

### Allgemeine Polymerisationsbedingungen

In einem 0,3 l-Autoklav wurden 100 g Methanol und der entsprechende kationische Palladiumkomplex vorgelegt. Danach wurde bei gewählter Reaktionstemperatur ein Gemisch aus Ethylen und Kohlenmonoxid im Molverhältnis 1:1 auf einen gewählten Druck aufgepreßt. Die Temperatur und die Partialdrücke der Monomere wurden während der gesamten Reaktionsdauer konstant gehalten. Nach gewünschter Reaktionszeit wurde die Polymerisation durch Abkühlen und Entspannen des Autoklaven abgebrochen. Das Produktgemisch wurde filtriert und der Rückstand unter Vakuum getrocknet. Die Versuchsparameter und Produkteigenschaften sind der Tabelle 2 (Beispiele 11 - 40) zu entnehmen.

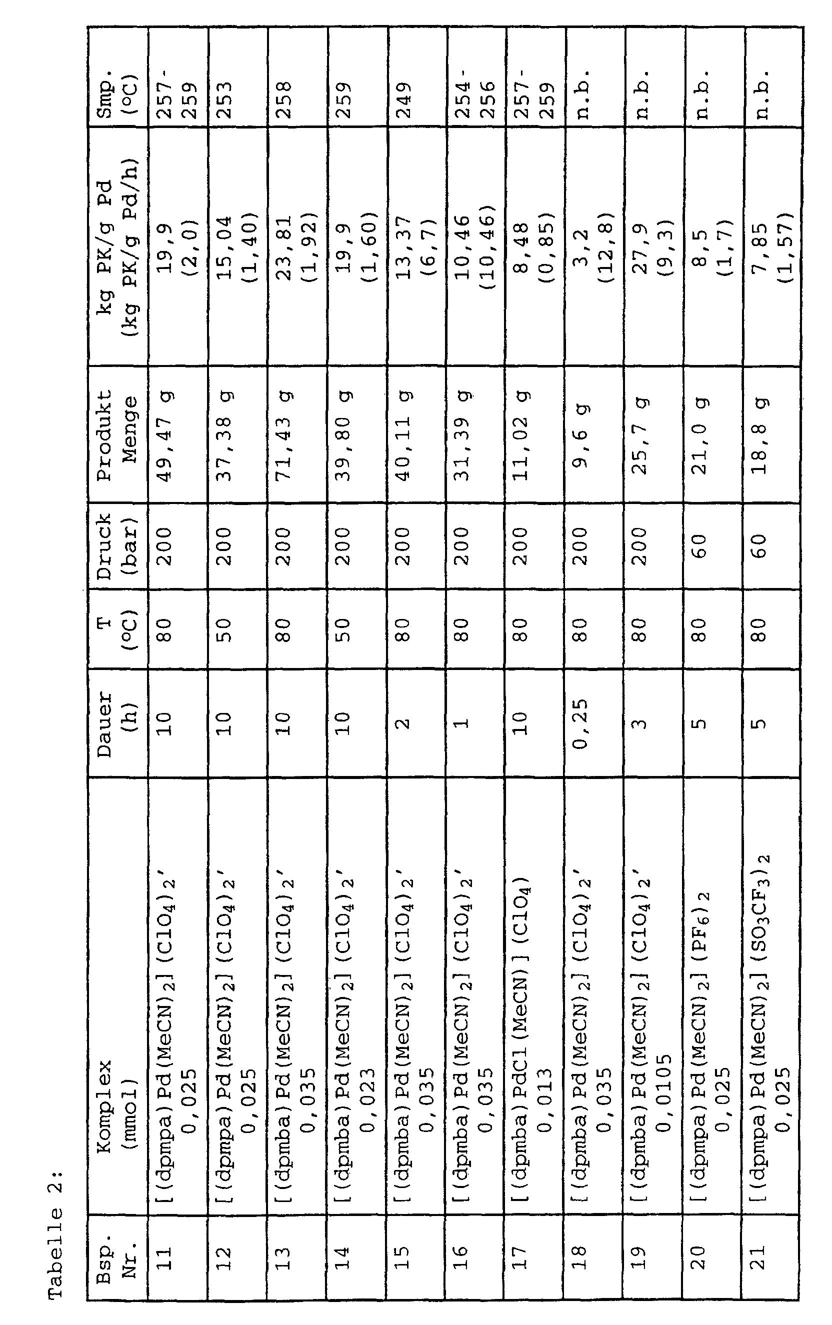

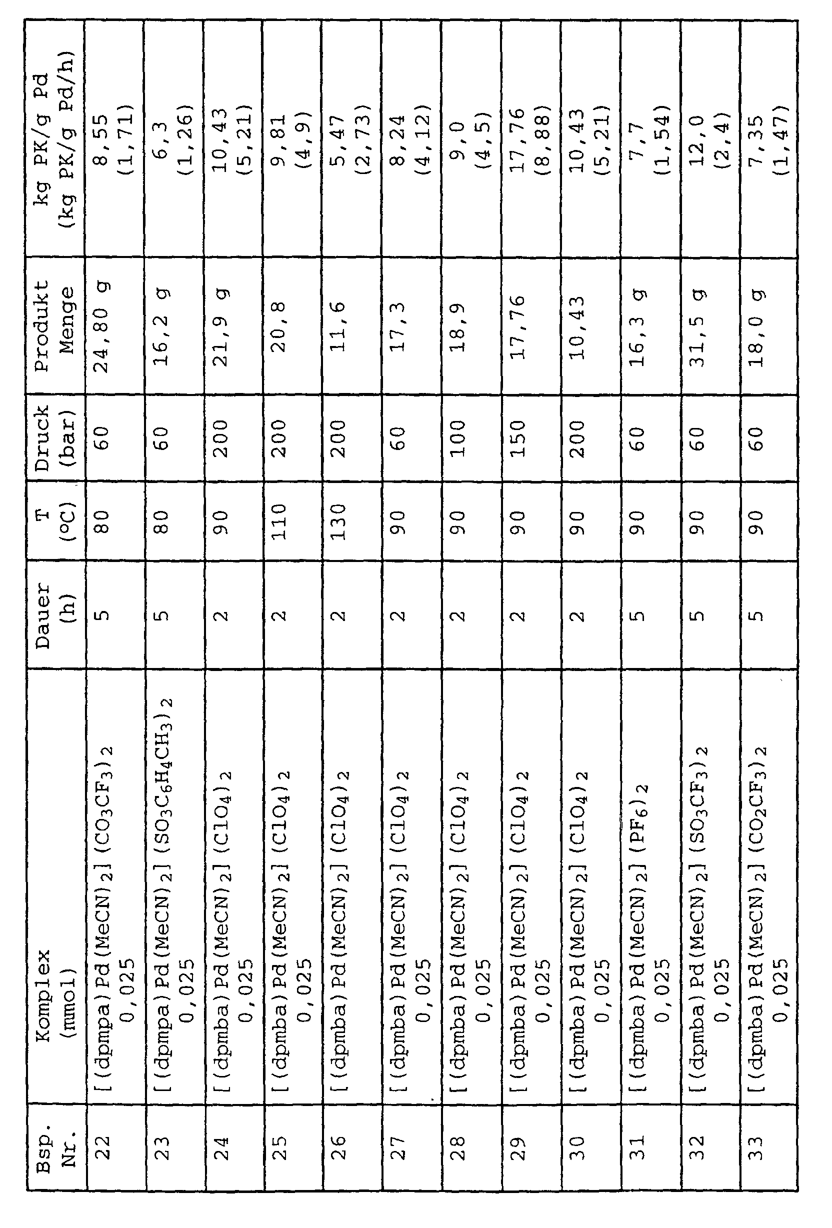

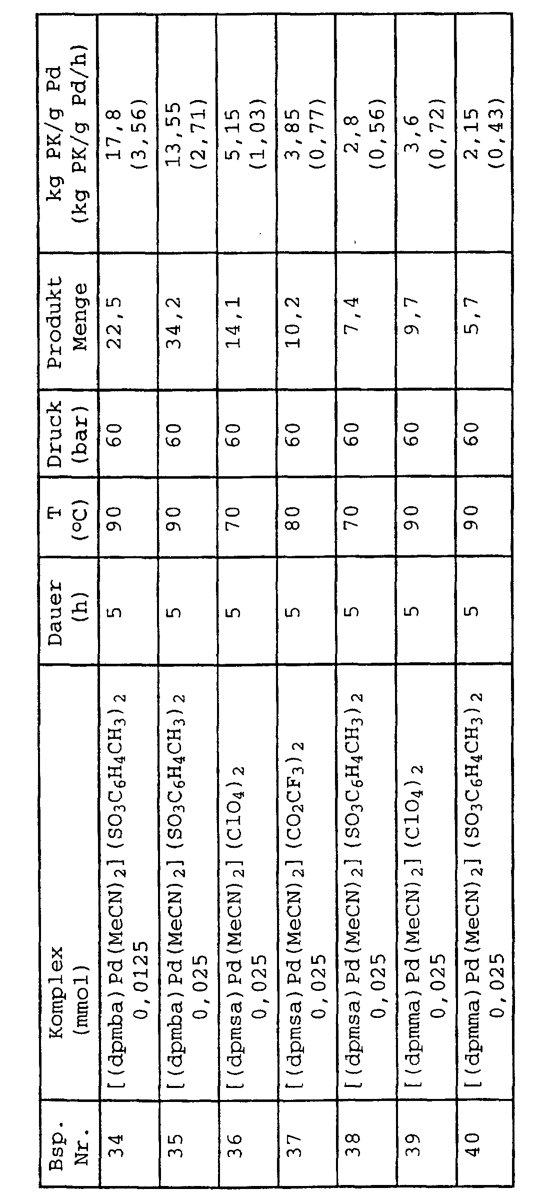

### b) Copolymerisation im 1,2 l-Autoklaven

### Allgemeine Polymerisationsbedingungen

In einem 1,2 l-Autoklaven wurden 600 g Methanol und die entsprechende Palladiumverbindung vorgelegt. Danach wurde bei 80°C ein Gemisch aus Ethylen und Kohlenmonoxid im Molverhältnis 1:1 auf 200 bar aufgepreßt. Die Temperatur und die Partialdrücke der Monomere wurden während der gesamten Reaktionsdauer konstant gehalten. Nach 5 h Reaktionszeit wurde die Polymerisation durch Abkühlen und Entspannen des Autoklaven abgebrochen. Das Produktgemisch wurde filtriert und der Rückstand unter Vakuum getrocknet. Die Versuchsparameter und Produkteigenschaften sind der Tabelle 3 zu entnehmen.

**Tabelle 3:**

| Bsp. Nr. | Komplex (mmol) | Produkt Menge | kg PK/g Pd (kg PK/g Pd/h) | Smp. (°C) |
|---|---|---|---|---|
| 41 | [(dpmba)Pd(MeCN)₂] (ClO₄)₂' 0,105 | 273,0 g | 30,33 (4,9) | 263 |
| 42 | [(dpmba)Pd(MeCN)₂] (ClO₄)₂' 0,070 | 153,0 g | 25,5 (4,1) | 269 |

### 3) Copolymerisationen mit definierten neutralen Palladiumkomplexen

### a) Copolymerisation im 0,3 l-Autoklaven

### Allgemeine Polymerisationsbedingungen

In einem 0,3 l-Autoklav wurden 100 ml Methanol vorgelegt. Es wurde der entsprechende neutrale Palladiumkomplex sowie die entsprechende Säure bzw. Anilinium-tetrakis(pentafluorphenyl)borat (abgekürzt: Borat) zugegeben. Danach wurde bei gewählter Reaktionstemperatur ein Gemisch aus Ethylen und Kohlenmonoxid im Molverhältnis 1 : 1 auf einen gewählten Druck aufgepreßt. Die Temperatur und die Partialdrücke der Monomere wurden während der gesamten Reaktionsdauer konstant gehalten. Nach gewünschter Reaktionszeit wurde die Polymerisation durch Abkühlen und Entspannen des Autoklaven abgebrochen. Das Produktgemisch wurde filtriert und der Rückstand unter Vakuum getrocknet. Die Versuchsparameter und Produkteigenschaften sind der Tabelle 4 (Beispiele 43-59) zu entnehmen.

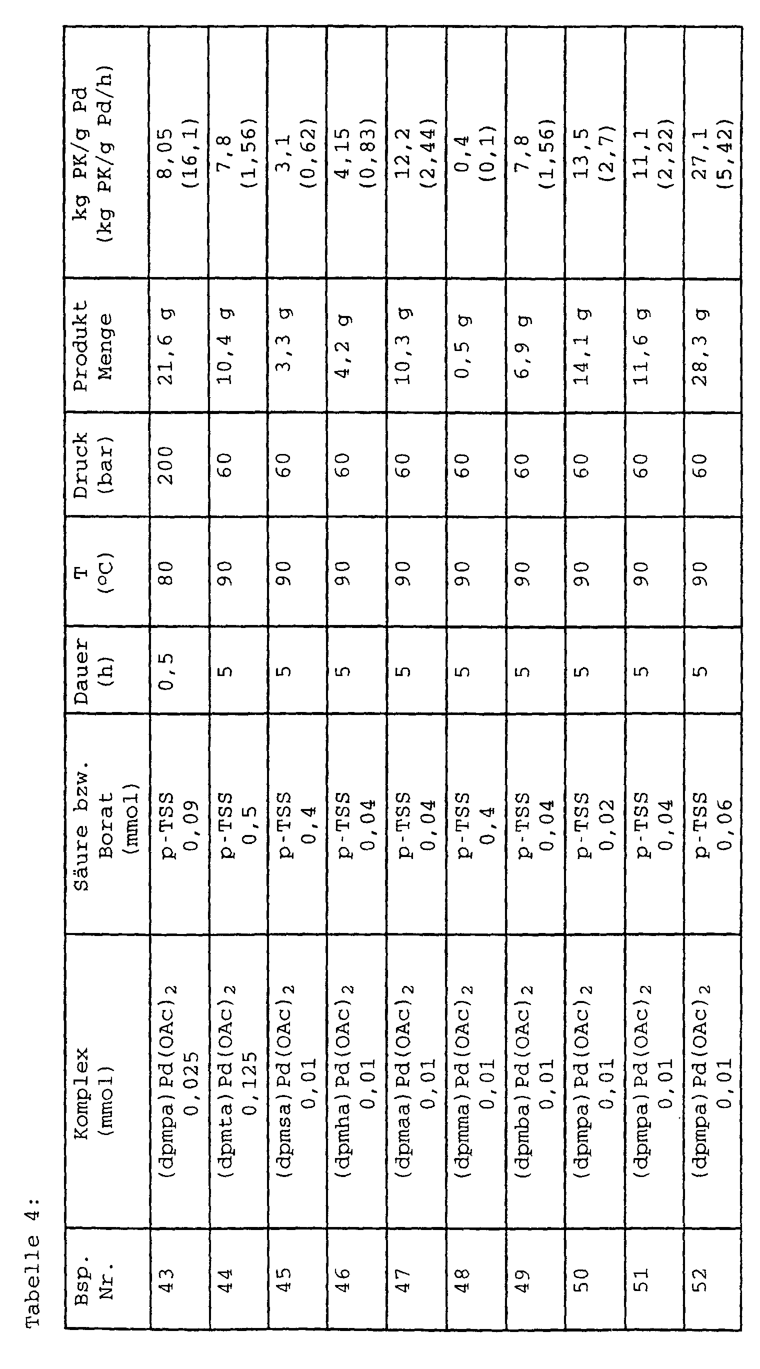

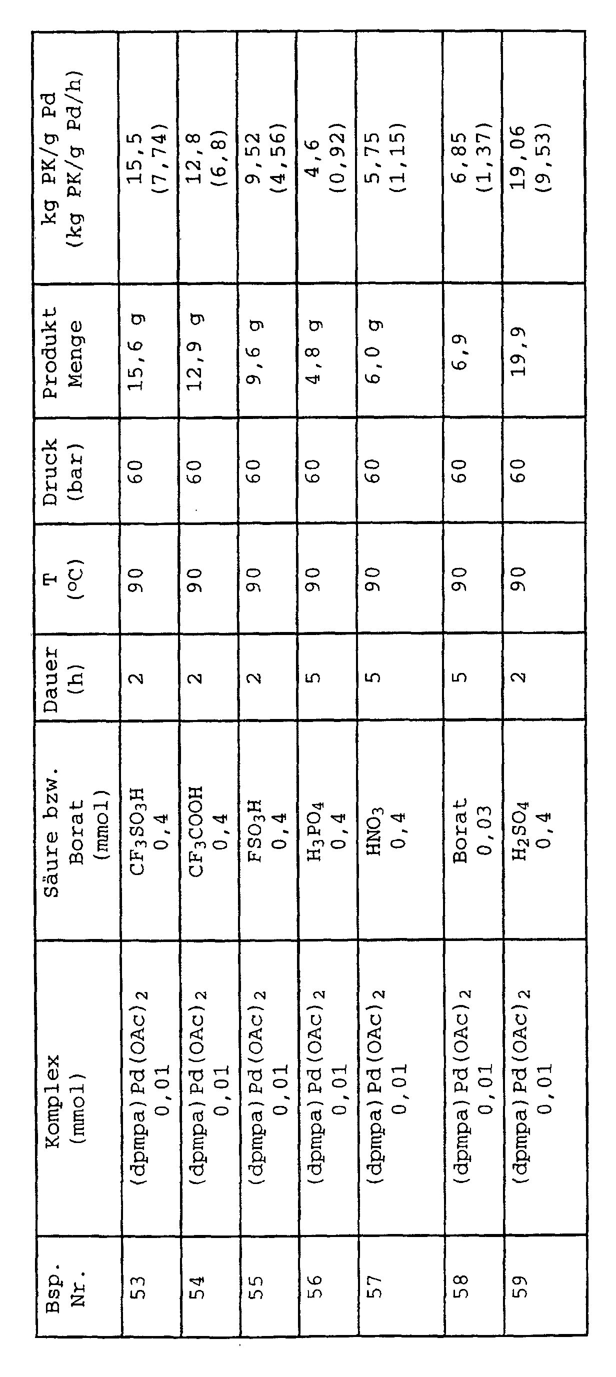

### b) Copolymerisation im 2,5 l-Autoklaven

### Allgemeine Polymerisationsbedingungen:

In einem 2,5 l-Autoklaven wurden 790 g Methanol vorgelegt, 30 bar CO/Ethen (1:1) aufgepreßt und der Autoklav auf 90°C erwärmt. Der gewählte Palladiumacetat-Komplex sowie die Säure wurden in 50 g Methanol aufgenommen und über eine Schleuse mit einem Ethylenüberdruck von 5 bar in den Autoklav gegeben. Anschließend wurde ein CO/Ethen-Gemisch (1:1) bis zu einem Gesamtdruck von 60 bar aufgepreßt. Die Temperatur und die Partialdrücke der Monomere wurden während der gesamten Reaktionsdauer konstant gehalten. Nach 1 h Reaktionszeit wurde die Polymerisation durch Abkühlen und Entspannen des Autoklaven abgebrochen, das Produktgemisch wurde filtriert und der Rückstand unter Vakuum getrocknet. Die Versuchsparameter und Produkteigenschaften sind der nachfolgenden Tabelle 5 zu entnehmen.

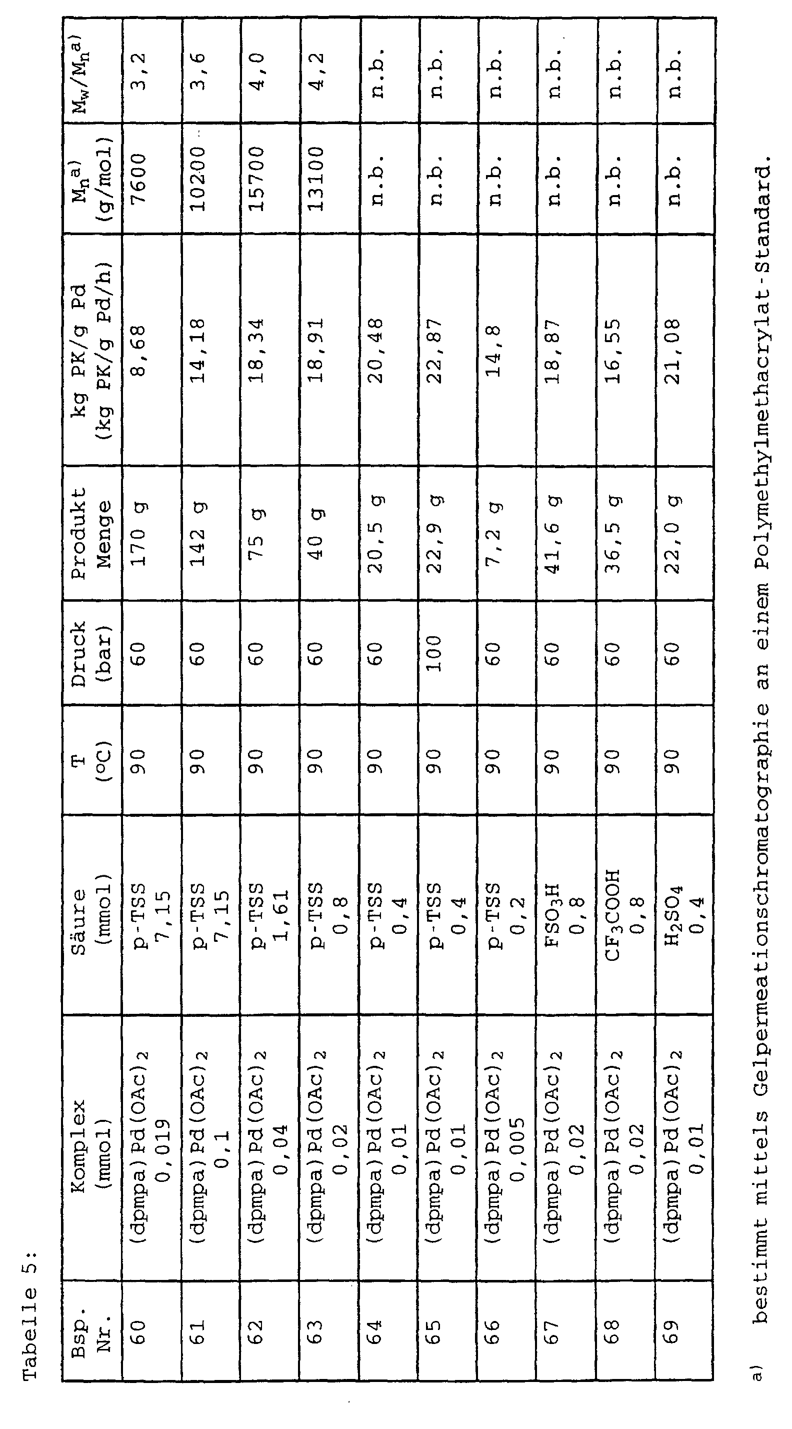

## Patentansprüche

1. Katalysatorsysteme, enthaltend als aktive Bestandteile
a) einen Metallkomplex der allgemeinen Formel (I) 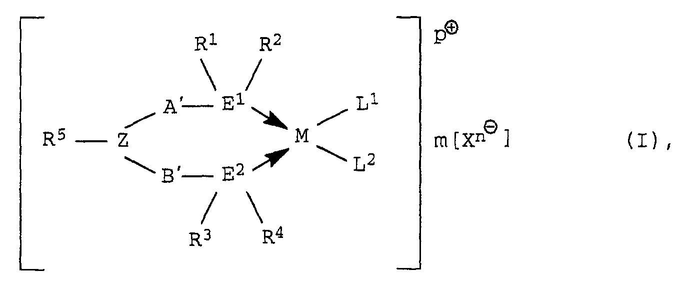 in welcher die Substituenten und Indizes die folgende Bedeutung haben:
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 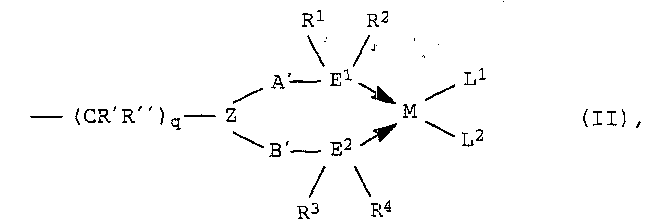 in der
q eine ganze Zahl von 0 bis 20 bedeutet und
R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und
die weiteren Substituenten in (II) wie in (I) die nachfolgende Bedeutung haben,
M ein Metall aus der Gruppe VIIIB des Periodensystems der Elemente,
E¹, E² ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten,
L¹, L² formal geladene oder neutrale Liganden,
X formal ein- oder mehrwertige Anionen,
p 0, 1, 2, 3 oder 4
m, n 0, 1, 2, 3 oder 4
wobei p = m x n und
b) eine oder mehrere Lewis- oder Protonensäuren oder ein Gemisch von Lewis- und Protonensäuren.

2. Katalysatorsysteme nach Anspruch 1, enthaltend als aktive Bestandteile
a) einen Metallkomplex der allgemeinen Formel (I), 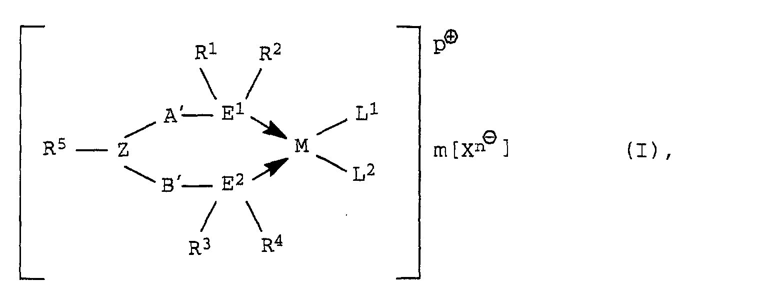 in welcher die Substituenten und Indizes die folgende Bedeutung haben:
R⁵ Wasserstoff, aliphatische Reste, wie Methyl, Ethyl, i-Propyl oder t-Butyl, cycloaliphatische Reste, wie Cyclopentyl oder Cyclohexyl, aromatische Reste, wie Phenyl, o-Methoxyphenyl oder 4-Hydroxyphenyl, Substituenten mit anionischen Gruppen, wie -(CH₂)ₙ-SO₃⁻, Substituenten mit kationischen Gruppen, wie -(CH₂)ₙ-NR₃⁺ oder Hydroxyoder Aminogruppen enthaltende Substituenten, wie -(CH₂)ₙ-OH bzw. -(CH₂)ₙ-NR² (n = 1 bis 30), wobei R Wasserstoff, Aryl oder Alkyl bedeutet, Reste der allgemeinen Formel (II) 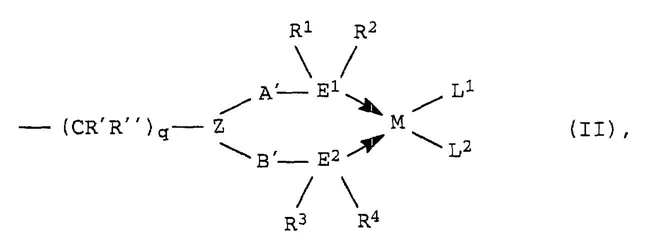 in der
q eine ganze Zahl von 0 bis 20 bedeutet und
R', R" unabhängig voneinander Wasserstoff oder C₁- bis C₁₀-Alkyl, geradkettig oder verzweigt, wie Methyl, Ethyl, i-Propyl, n-Propyl, C₃- bis C₁₀-Cycloalkyl wie Cyclopropyl, Cyclopentyl, Cyclohexyl, C6- bis C₁₄-Aryl, wie Phenyl, bedeuten und
die weiteren Substituenten in (II) wie in (I) die nachfolgende Bedeutung haben,
M Palladium oder Nickel,
E¹, E² Stickstoff oder Phosphor,
Z Stickstoff,
R¹ bis R⁴ Cyclopropyl, Cyclopentyl, Cyclohexyl oder Menthyl, i-Propyl, s-Butyl oder t-Butyl, Phenyl, o-Methoxyphenyl oder p-Trifluormethylphenyl, Pyridyl,
A', B' Methylen oder Ethylen in substituierter und unsubstituierter Form, Benzyliden, o-Phenylen,
L¹, L² Hydride, Sulfate, Halogenide, Phosphate, Nitrate, Acetonitril, Methanol, Acetylaceton, Tetrahydrofuran, Acetat, Trifluoracetat, Tosylat, Wasser,
X Tetrafluoroborat, Hexafluorophosphat, Hexafluoroantimonat, Pentafluorbenzoat, Trifluormethansulfonat, Trifluoracetat, Perchlorat, p-Toluolsulfonat, Tetraarylborate
p 0, 1, 2, 3 oder 4,
m, n 0, 1, 2, 3 oder 4,
wobei p = m x n, und
b) Trifluoressigsäure, Perchlorsäure, p-Toluolsulfonsäure, Triarylborane.

3. Katalysatorsysteme nach den Ansprüchen 1 bis 2, **dadurch gekennzeichnet, daß** entweder L¹ oder L² ein Halogenid darstellt.

4. Verwendung der Katalysatorsysteme gemäß den Ansprüchen 1 bis 3 zur Copolymerisation von Kohlenmonoxid mit olefinisch ungesättigten Verbindungen.

5. Verfahren zur Herstellung von Copolymerisaten aus Kohlenmonoxid und olefinisch ungesättigten Verbindungen, **dadurch gekennzeichnet, daß** die Copolymerisation in Gegenwart eines Katalysatorsystems gemäß den Ansprüchen 1 bis 3 durchgeführt wird.

6. Verfahren zur Herstellung von Copolymerisaten aus Kohlenmonoxid und olefinisch ungesättigten Verbindungen, **dadurch gekennzeichnet, daß** die Copolymerisation in Gegenwart eines Metallkomplexes der allgemeinen Formel (I) 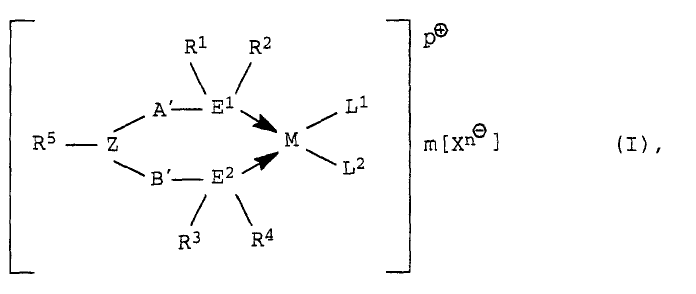 in welcher die Substituenten und Indizes die folgende Bedeutung haben
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel II 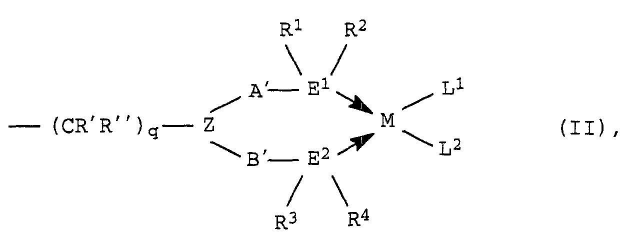 in der
q eine ganze Zahl von 0 bis 20 bedeutet und
R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und
die weiteren Stubstituenten in (II) wie in (I) die nachfolgende Bedeutung haben,
M ein Metall aus der Gruppe VIIIB des Periodensystems der Elemente,
E¹, E¹ ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten,
L¹, L² neutrale Liganden,
X formal ein- oder mehrwertige Anionen,
p 0, 1, 2, 3 oder 4,
m, n 0, 1, 2, 3 oder 4,
wobei p = m x n,
durchgeführt wird.

7. Verfahren zur Herstellung von Copolymerisaten aus Kohlenmonoxid und olefinisch ungesättigten Monomerverbindungen, **dadurch gekennzeichnet, daß** die Monomeren in Gegenwart
i) eines Metalls M, ausgewählt aus der Gruppe VIIIB des Periodensystems der Elemente, das in Salzform oder als Komplexsalz vorliegt,
ii) eines Chelatliganden der allgemeinen Formel (III) 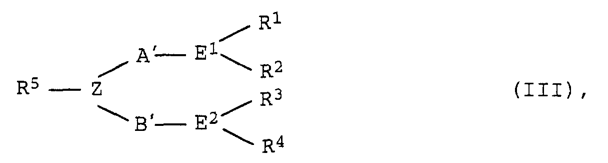 in welcher die Substituenten und Indizes die folgende Bedeutung haben:
R⁵ Wasserstoff oder Substituenten, ausgewählt aus der Gruppe bestehend aus C₁- bis C₂₀-kohlenstofforganischen und C₃- bis C₃₀-siliciumorganischen Resten in substituierter und unsubstituierter Form, oder NR⁶R⁷-Substituenten, oder einen Rest der allgemeinen Formel (IV) 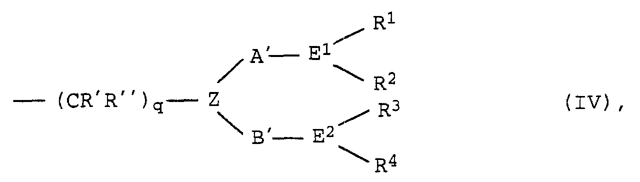 in der
q eine ganze Zahl von 0 bis 20 bedeutet und
R', R'' Wasserstoff oder Substituenten, ausgewählt aus der Gruppe bestehend aus C₁- bis C₂₀-kohlenstofforganischen und C₃- bis C₃₀-siliciumorganischen Resten, darstellen und
die weiteren Stubstituenten in (II) wie in (I) die nachfolgende Bedeutung haben,
E¹, E² ein Element aus der Gruppe VA des Periodensystems der Elemente,
Z ein Element aus der Gruppe VA des Periodensystems der Elemente,
R¹ bis R⁴ Substituenten, unabhängig voneinander ausgewählt aus der Gruppe bestehend aus C₁- bis C₂₀-kohlenstofforganischen und C₃- bis C₃₀-siliciumorganischen Resten in substituierter und unsubstituierter Form,
A', B' C₁-C₄-Alkyleneinheiten in substituierter und unsubstituierter Form, silylenverbrückte organische Reste sowie -NR⁸-Reste,
R⁶ bis R⁸ Wasserstoff oder Substituenten, ausgewählt aus der Gruppe bestehend aus C₁- bis C₂₀-kohlenstofforganischen und C₃- bis C₃₀-siliciumorganischen Resten und
iii) einer oder mehrerer Protonen- oder Lewissäuren oder eines Gemisches von Protonen- und Lewissäuren
polymerisiert werden.

## Claims

1. A catalyst system comprising as active constituents
a) a metal complex of the formula (I) 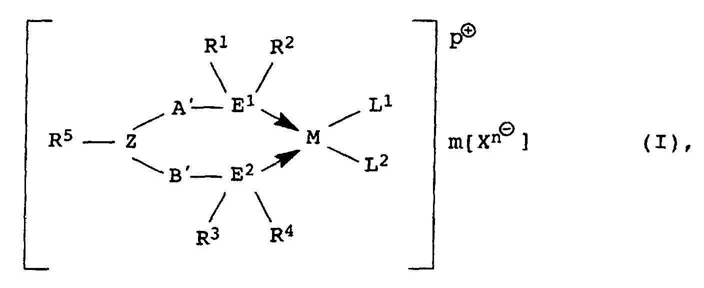 where the substituents and indices have the following meanings:
R⁵ is hydrogen or a substituent selected from the group consisting of C₁-C₂₀-organic and C₃-C₃₀-organosilicon radicals in substituted and unsubstituted form, or a NR⁶R⁷ substituent or a radical of the formula II 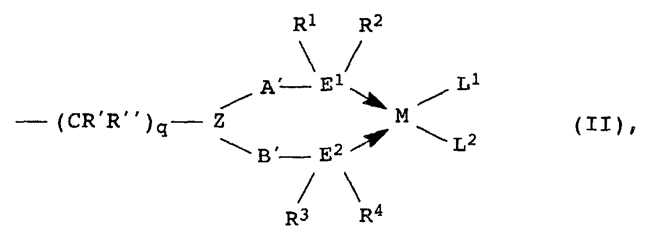 where
q is an integer from 0 to 20 and
R', R'' is hydrogen or substituents selected from the group consisting of C₁-C₂₀ organic and C₃-C₃₀-organosilicon radicals and
the further substituents in (II) as in (I) have the following meanings,
M is a metal from group VIIIB of the Periodic Table of the Elements,
E¹, E² are elements from group VA of the Periodic Table of the Elements,
Z is an element from group VA of the Periodic Table of the Elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted and unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals,
L¹, L² are formally charged or uncharged ligands,
X is a formally monovalent or polyvalent anion,
p is 0, 1, 2, 3 or 4,
m, n are 0, 1, 2, 3 or 4,
where p = m x n and
b) one or more Lewis or protic acids or a mixture of Lewis and protic acids.

2. A catalyst system as claimed in claim 1 comprising as active constituents
a) a metal complex of the formula (I), 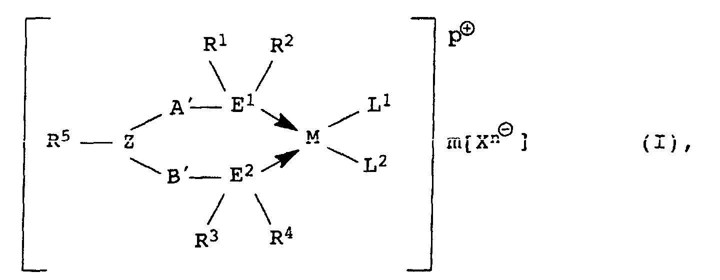 where the substituents and indices have the following meanings:
R⁵ is hydrogen, an aliphatic radical, such as methyl, ethyl, i-propyl or t-butyl, a cycloaliphatic radical such as cyclopentyl or cyclohexyl, an aromatic radical such as phenyl, o-methoxyphenyl or 4-hydroxyphenyl, a substituent containing an anionic group, eg. -(CH₂)ₙ-SO₃⁻, a substituent containing a cationic group, eg. -(CH₂)ₙ-NR₃⁺, or a hydroxyl- or amino-containing substituent such as -(CH₂)ₙ-OH or -(CH₂)ₙ-NR₂ (n = 1 to 30), where R is hydrogen, aryl or alkyl, a radical of the formula (II) 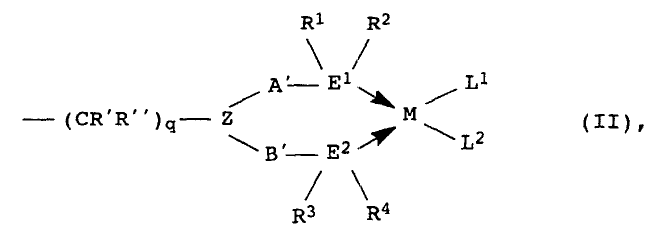 where
q is an integer from 0 to 20 and
R', R'' are, independently of one another, hydrogen or C₁-C₁₀-alkyl, straight-chain or branched, such as methyl, ethyl, i-propyl or n-propyl, C₃-C₁₀-cycloalkyl such as cyclopropyl, cyclopentyl or cyclohexyl, C₆-C₁₄-aryl, such as phenyl, and
the further substituents in (II) as in (I) have the following meanings,
M is palladium or nickel,
E¹, E² are nitrogen or phosphorus,
Z is nitrogen,
R¹ to R⁴ are cyclopropyl, cyclopentyl, cyclohexyl or menthyl, i-propyl, s-butyl or t-butyl, phenyl, o-methoxyphenyl or p-trifluoromethylphenyl, pyridyl,
A', B' are methylene or ethylene in substituted or unsubstituted form, benzylidene, o-phenylene,
L¹, L² are hydride, sulfates, halides, phosphates, nitrate, acetonitrile, methanol, acetylacetone, tetrahydrofuran, acetate, trifluoroacetate, tosylate, water,
X is tetrafluoroborate, hexafluorophosphate, hexafluoroantimonate, pentafluorobenzoate, trifluoromethanesulfonate, trifluoroacetate, perchlorate, p-toluenesulfonate, tetraarylborate,
p is 0, 1, 2, 3 or 4,
m, n are 0, 1, 2, 3 or 4,
where p = m x n, and
b) trifluoroacetic acid, perchloric acid, p-toluenesulfonic acid, triarylborane.

3. A catalyst system as claimed in claim 1 or 2, wherein either L¹ or L² is a halide.

4. Use of a catalyst system as claimed in any of claims 1 to 3 for copolymerizing carbon monoxide with olefinically unsaturated compounds.

5. A process for preparing copolymers of carbon monoxide and olefinically unsaturated compounds, wherein the copolymerization is carried out in the presence of a catalyst system as claimed in any of claims 1 to 3.

6. A process for preparing copolymers of carbon monoxide and olefinically unsaturated compounds, wherein the copolymerization is carried out in the presence of a metal complex of the formula (I) 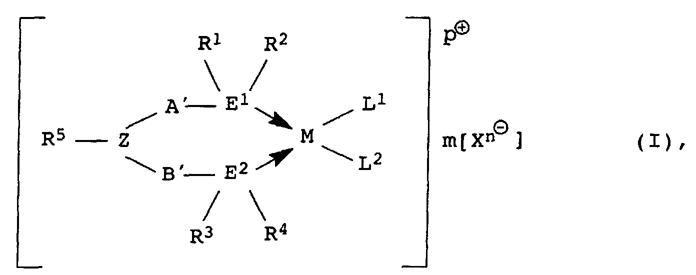 where the substituents and indices have the following meanings:
R⁵ is hydrogen or a substituent selected from the group consisting of C₁-C₂₀-organic and C₃-C₃₀-organosilicon radicals in substituted and unsubstituted form, or an NR⁶R⁷ substituent or a radical of the formula II 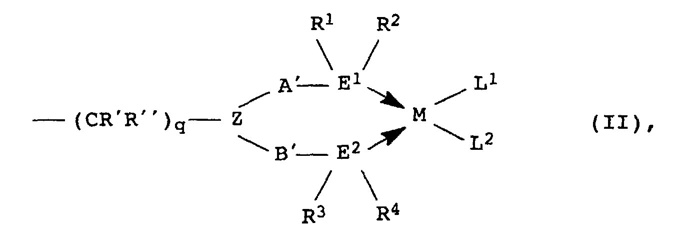 where
q is an integer from 0 to 20 and
R', R'' are hydrogen or substituents selected from the group consisting of C₁-C₂₀ organic and C₃-C₃₀-organosilicon radicals and
the further substituents in (II) as in (I) have the following meanings,
M is a metal from group VIIIB of the Periodic Table of the Elements,
E¹, E² are elements from group VA of the Periodic Table of the Elements,
Z is an element from group VA of the Periodic Table of the Elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted and unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals,
L¹, L² are uncharged ligands,
X is a formally monovalent or polyvalent anion,
p is 0, 1, 2, 3 or 4,
m, n are 0, 1, 2, 3 or 4,
where p = m x n.

7. A process for preparing copolymers of carbon monoxide and olefinically unsaturated monomer compounds, wherein the monomers are polymerized in the presence of
i) a metal M selected from group VIIIB of the Periodic Table of the Elements, which is present in salt form or as a complex salt,
ii) a chelating ligand of the formula (III) 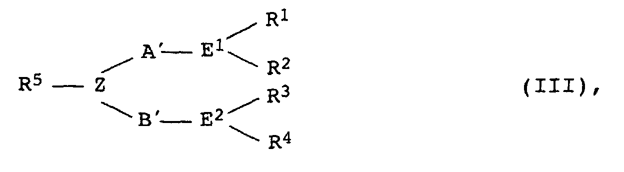 where the substituents and indices have the following meanings:
R⁵ is hydrogen or a substituent selected from the group consisting of C₁-C₂₀-organic and C₃-C₃₀-organosilicon radicals in substituted and unsubstituted form, or an NR⁶R⁷-substituent or a radical of the formula (IV) 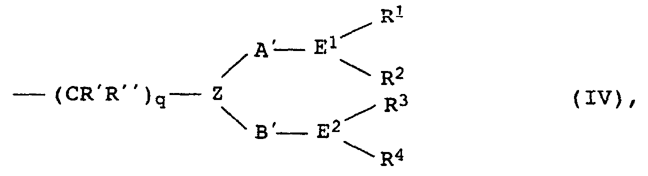 where
q is an integer from 0 to 20 and
R', R'' are hydrogen or substituents selected from the group consisting of C₁-C₂₀-organic and C₃-C₃₀-organosilicon radicals and
the further substituents in (II) as in (I) have the following meanings,
E¹, E² are elements from group VA of the Periodic Table of the Elements,
Z is an element from Group VA of the Periodic Table of the Elements,
R¹ to R⁴ are substituents selected, independently of one another, from the group consisting of C₁-C₂₀-organic and C₃-C₃₀-organosilicon radicals in substituted and unsubstituted form,
A', B' are C₁-C₄-alkylene units in substituted or unsubstituted form, silylene-bridged organic radicals or NR⁸ radicals,
R⁶ to R⁸ are hydrogen or substituents selected from the group consisting of C₁-C₂₀-organic and C₃-C₃₀-organosilicon radicals and
iii) one or more protic or Lewis acids or a mixture of protic and Lewis acids.

## Revendications

1. Systèmes catalytiques contenant en tant que constituants actifs
a) un complexe métallique de la formule (I) 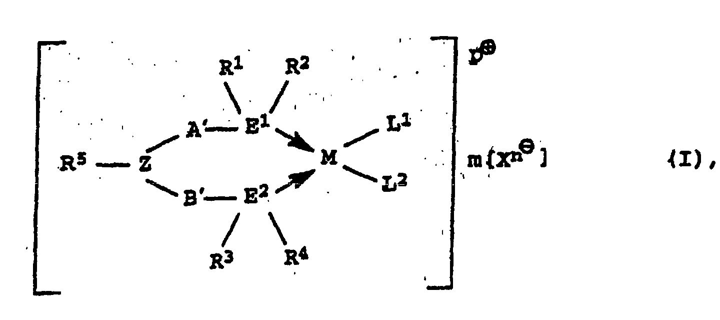 dans lequel les substituants et indices ont les significations suivantes:
R⁵ de l'hydrogène ou des substituants, choisis dans le groupe formé par des restes organocarbonés en C₁ à C₂₀ et des restes organosiliciques en C₃ à C₃₀, ou des substituants NR⁶R⁷, ou un reste de la formule générale II 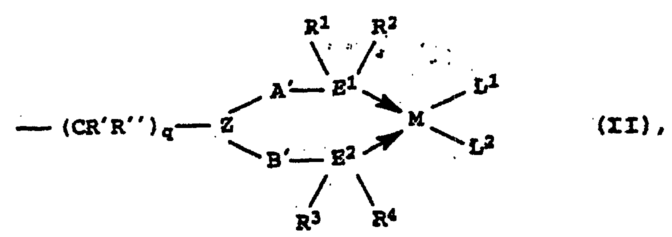 dans laquelle
q représente un nombre entier de 0 à 20 et
R', R" de l'hydrogène ou des substituants, choisis dans le groupe formé par des restes organocarbonés en C₁ à C₂₀ et des restes organosiliciques en C₃ à C₃₀, et
les autres substituants dans (II) comme dans (I) ont les significations suivantes,
M un métal du groupe VIIIB du système périodique des éléments,
E¹, E² un élément du groupe VA du système périodique des éléments,
Z un élément du groupe VA du système périodique des éléments,
R¹ à R⁴ des substituants, choisis indépendamment les uns des autres dans le groupe formé par des restes organocarbonés en C₁ à C₂₀ et des restes organosiliciques en C₃ à C₃₀ sous forme substituée et non substituée,
A', B' des unités alkyle en C₁ à C₄ sous forme substituée et non substituée, des restes organiques à pont de silyle ou des restes NR⁸,
R⁶ à R⁸ de l'hydrogène ou des substituants, choisis dans le groupe formé par des restes organocarbonés en C₁ à C₂₀ et des restes organosiliciques en ₃ à C₃₀,
L¹, L² des ligands à charge formelle ou neutres,
X des anions à une ou plusieurs valences formelles,
p 0, 1, 2, 3 ou 4
m, n 0, 1, 2, 3 ou 4
où p = m x n et
b) un ou plusieurs acides protoniques ou de Lewis ou un mélange d'acides protoniques et de Lewis.

2. Systèmes catalytiques selon la revendication 1, contenant en tant que constituants actifs
a) un complexe métallique de la formule générale (I), 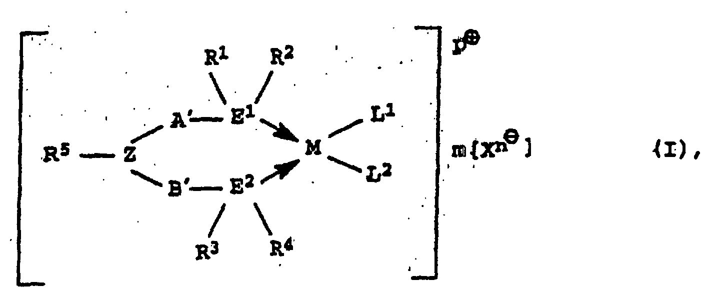 dans lequel les substituants et indices ont les significations suivantes:
R⁵ de l'hydrogène, des restes aliphatiques comme des restes méthyle, éthyle, i-propyle ou t-butyle, des restes cycloaliphatiques comme le cyclopentyle ou le cyclohexyle, des restes aromatiques comme le phényle, l'o-méthoxyphényle ou le 4-hydroxyphényle, des substituants comportant des groupes anioniques, comme -(CH₂)ₙ-SO₃⁻, des substituants comportant des groupes cationiques, comme -(CH₂)ₙ-NR₃⁺ ou des substituants comportant des groupes hydroxyle ou amino, comme (CH₂)ₙ-OH ou (CH₂)ₙ-NR₂ (n = 1 à 30), où R représente de l'hydrogène, ou un radical aryle ou alkyle, des restes de la formule générale (II) 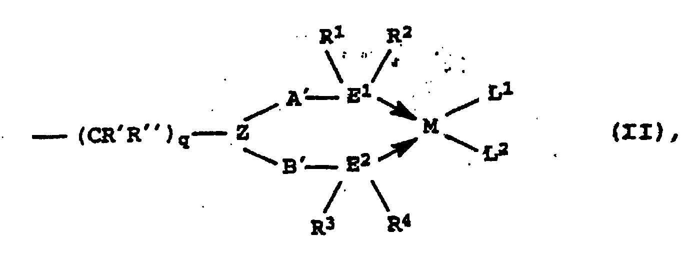 dans laquelle
q représente un nombre entier de 0 à 20 et
R', R" représentent indépendamment l'un de l'autre de l'hydrogène ou des radicaux alkyle en C₁ à C₁₀ comme le méthyle, l'éthyle, le i-propyle, le n-propyle, cycloalkyle en C₃ à C₁₀ comme le cyclopropyle, le cyclopentyle, le cyclohexyle, aryle en C₆ à C₁₄ comme le phényle, et
les autres substituants dans (II) comme dans (I) ont les significations suivantes,
M du palladium ou du nickel,
E¹, E² de l'azote ou du phosphore,
Z de l'azote,
R¹ à R⁴ des radicaux cyclopropyle, cyclopentyle, cyclohexyle ou menthyle, i-propyle, s-butyle ou t-butyle, phényle, o-méthoxyphényle ou p-trifluorométhylphényle, pyridyle,
A', B' des radicaux méthylène ou éthylène sous forme substituée et non substituée, benzylidène, o-phénylène,
L¹, L² des hydrures, des sulfates, des halogénures, des phosphates, des nitrates, de l'acétonitrile, du méthanol, de l'acétylacétone, du tétrahydrofuranne, de l'acétate, du trifluoroacétate, du tosylate, de l'eau,
X du tétrafluoroborate, de l'hexafluorophosphate, de l'hexafluoroantimoniate, du pentafluorobenzoate, du trifluorométhane-sulfonate, du trifluoroacétate, du perchlorate, du p-toluène-sulfonate, du tétraarylborate,
p 0, 1, 2, 3 ou 4
m, n 0, 1, 2, 3 ou 4
où p = m x n et
b) de l'acide trifluoracétique, de l'acide perchlorique, de l'acide p-toluène-sulfonique, du triarylborane.

3. Systèmes catalytiques selon les revendications 1 à 2, **caractérisés en ce que** L¹ ou L² représente un halogénure.

4. Utilisation des systèmes catalytiques selon les revendications 1 à 3 pour la copolymérisation de monoxyde de carbone avec des composés oléfiniquement insaturés.

5. Procédé de préparation de copolymères de monoxyde de carbone et de composés oléfiniquement insaturés, **caractérisé en ce que** la copolymérisation est entreprise en présence d'un système catalytique selon les revendications 1 à 3.

6. Procédé de préparation de copolymères de monoxyde de carbone et de composés oléfiniquement insaturés, **caractérisé en ce que** la copolymérisation est entreprise en présence d'un complexe métallique de la formule (I) 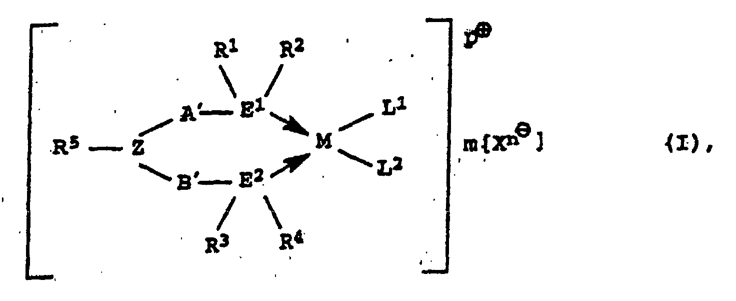 dans laquelle les substituants et indices ont les significations suivantes:
R⁵ de l'hydrogène ou des substituants, choisis dans le groupe formé par des restes organocarbonés en C₁ à C₂₀ et des restes organosiliciques en C₃ à C₃₀ sous forme non substituée ou substituée, ou des substituants NR⁶R⁷, ou un reste de la formule générale II 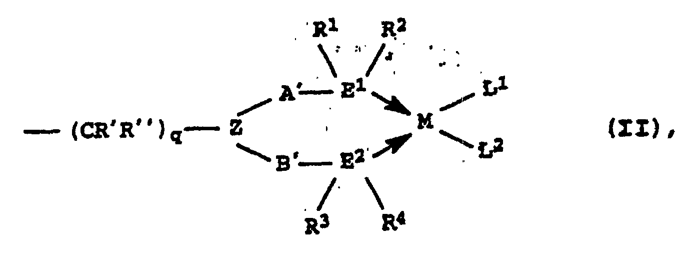 dans laquelle
q représente un nombre entier de 0 à 20 et
R', R" de l'hydrogène ou des substituants, choisis dans le groupe formé par des restes organocarbonés en C₁ à C₂₀ et des restes organosiliciques en C₃ à C₃₀, et
les autres substituants dans (II) comme dans (I) ont les significations suivantes,
M un métal du groupe VIIIB du système périodique des éléments,
E¹, E² un élément du groupe VA du système périodique des éléments,
Z un élément du groupe VA du système périodique des éléments,
R¹ à R⁴ des substituants, choisis indépendamment les uns des autres dans le groupe formé par des restes organocarbonés en C₁ à C₂₀ et des restes organosiliciques en C₃ à C₃₀ sous forme substituée et non substituée,
A', B' des unités alkyle en C₁ à C₄ sous forme substituée et non substituée, des restes organiques à pont de silyle ainsi que des restes NR⁸,
R⁶ à R⁸ de l'hydrogène ou des substituants, choisis dans le groupe formé par des restes organocarbonés en C₁ à C₂₀ et des restes organosiliciques en ₃ à C₃₀,
L¹, L² des ligands neutres,
X des anions à une ou plusieurs valences formelles,
p 0, 1, 2, 3 ou 4
m, n 0, 1, 2, 3 ou 4
où p = m x n.

7. Procédé de préparation de copolymères de monoxyde de carbone et de composés monomères oléfiniquement insaturés, **caractérisé en ce que** les monomères sont polymérisés en présence de
i) un métal M, choisi dans le groupe VIIIB du système périodique des éléments, et qui se présente sous forme de sel ou de sel complexe,
ii) un ligand chélate de la formule générale (III) 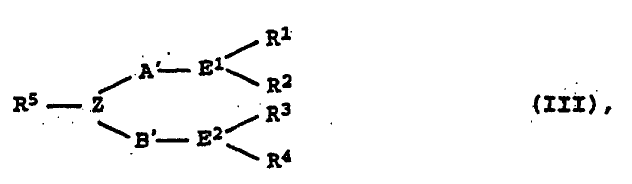 dans laquelle les substituants et indices ont les significations suivantes:
R⁵ de l'hydrogène ou des substituants, choisis dans le groupe formé par des restes organocarbonés en C₁ à C₂₀ et des restes organosiliciques en C₃ à C₃₀ sous forme substituée et non substituée, ou des substituants NR⁶R⁷, ou un reste de la formule générale (IV) 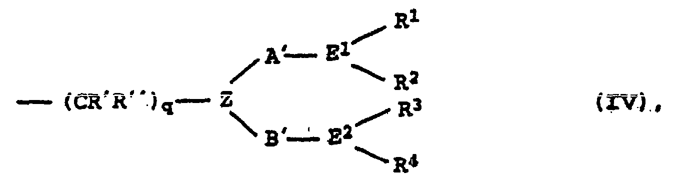 dans laquelle
q représente un nombre entier de 0 à 20 et
R', R" de l'hydrogène ou des substituants, choisis dans le groupe formé par des restes organocarbonés en C₁ à C₂₀ et des restes organosiliciques en C₃ à C₃₀, et
les autres substituants dans (III) comme dans (IV) ont les significations suivantes,
E¹, E² un élément du groupe VA du système périodique des éléments,
Z un élément du groupe VA du système périodique des éléments,
R¹ à R⁴ des substituants, choisis indépendamment les uns des autres dans le groupe formé par des restes organocarbonés en C₁ à C₂₀ et des restes organosiliciques en C₃ à C₃₀ sous forme substituée et non substituée,
A', B' des unités alkyle en C₁ à C₄ sous forme substituée et non substituée, des restes organiques à pont de silyle ou des restes -NR⁸,
R⁶ à R⁸ de l'hydrogène ou des substituants, choisis dans le groupe formé par des restes organocarbonés en C₁ à C₂₀ et des restes organosiliciques en ₃ à C₃₀, et
iii) un ou plusieurs acides protoniques ou de Lewis ou un mélange d'acides protoniques et de Lewis.
